# EUROPÄISCHE PATENTANMELDUNG

(11) **EP 2 348 430 A2**
(43) Veröffentlichungstag der Anmeldung: **27.07.2011**
(21) Anmeldenummer: 10196048.2
(22) Anmeldetag: 20.12.2010
(51) Int. Cl.: G06F 17/50

(54) **System zum Gestalten eines Formteils**

(30) Priorität: 23.12.2009 DE 102009055314
(71) Anmelder: Polymer Competence Center Leoben Gmbh, 8700 Leoben (AT)
(72) Erfinder: Langecker, Günter R., 58540, Meinerzhagen (DE); Lucyshyn, Thomas, 8700, Leoben (AT); Fischer, Konrad, 8605, Kapfenberg (AT)
(74) Vertreter: Haeusler, Rüdiger Hans-Jörg

(57) **Zusammenfassung**

Vorrichtung zum Gestalten eines Formteils, wobei die Vorrichtung eine Eingabeeinheit zum benutzerdefinierten Eingeben von Gestaltungs-Daten zum Definieren des zu gestaltenden Formteils und eine Formteil-Datenbank aufweist, in der eine Mehrzahl von Formteil-Datensätzen gespeichert sind, von denen jeder für ein in der Vergangenheit gestaltetes Formteil kennzeichnend ist, wobei die Mehrzahl von Formteil-Datensätzen nach einer Mehrzahl von Formteilklassen klassifiziert sind. Die Vorrichtung weist ferner eine Auswahleinheit zum Auswählen von mindestens einem der Formteil-Datensätze als Basis für das Gestalten des Formteils auf, wobei das Auswählen basierend auf den eingegebenen Gestaltungs-Daten und den Formteilklassen erfolgt. Ferner weist die Vorrichtung eine Formteilgestaltungseinheit zum prozessorgesteuerten Unterstützen des Gestaltens des Formteils basierend auf dem mindestens einen ausgewählten Formteil-Datensatz und eine Werkzeuggestaltungseinheit, die zum prozessorgesteuerten Unterstützen des Gestaltens eines Werkzeugs zum physischen Herstellen des gestalteten Formteils eingerichtet ist, auf.

## Beschreibung

Die Erfindung betrifft eine Vorrichtung zum Gestalten eines Formteils.

Darüber hinaus betrifft die Erfindung ein Verfahren zum Gestalten eines Formteils.

Die Erfindung betrifft ferner ein computerlesbares Speichermedium.

Die Erfindung betrifft darüber hinaus ein Programm-Element.

Formteile können mittels unterschiedlicher Verfahren hergestellt werden, zum Beispiel mittels Spritzgießen.

Das Spritzgießen ist ein Urformverfahren, das hauptsächlich in der Kunststoffverarbeitung eingesetzt wird. Mit diesem Verfahren lassen sich Formteile in großer Stückzahl herstellen. Dazu wird mit einer Spritzgießmaschine der jeweilige Werkstoff, zum Beispiel Kunststoff, in einer Spritzgießeinheit plastifiziert und in ein Spritzgießwerkzeug eingespritzt. Der Hohlraum des Werkzeugs bestimmt die Form und die Oberflächenstruktur des fertigen Teils. Mit dem Spritzgießen lassen sich Gegenstände mit hoher Genauigkeit, wie zum Beispiel für die Feinwerktechnik, und/oder Massenprodukte in kurzer Zeit herstellen. Dabei kann die Oberfläche des Bauteiles nahezu frei gewählt werden. Glatte Oberflächen für optische Anwendungen, Narbungen für berührungsfreundliche Bereiche, Muster und Gravuren lassen sich herstellen.

In den letzten Jahrzehnten sind aus Kunststoff spritzgegossene Formteile entwickelt und hergestellt worden, die den täglichen Bedarf vielfältiger Gebrauchsgüter aber auch Hightech-Anwendungen abdecken. Die Formteile erfordern tiefe Kenntnisse in den verschiedensten Spritzgießverfahrenstechniken. Entwicklungszeit und Herstellungskosten sind dabei so gering wie möglich zu halten. Der Spritzgießwerkzeugbau für die Formteile spielt dabei eine wichtige Rolle. Schwindung und Verzug an den Formteilen stellen ein großes Problem dar und erfordern in der Regel nachträgliche Werkzeugänderungen, die nicht nur mit Kosten sondern auch mit Zeitverzögerungen verbunden sind.

Es ist immer noch schwierig, Formteile ausreichend schnell und zuverlässig sowie mit günstigen Materialeigenschaften zu gestalten.

Es ist eine Aufgabe der vorliegenden Erfindung, die Gestaltung eines Formteils ausreichend schnell und zuverlässig sowie mit guten Materialeigenschaften zu ermöglichen.

Diese Aufgabe wird durch eine Vorrichtung zum Gestalten eines Formteils, durch ein Verfahren zum Gestalten eines Formteils, durch ein computerlesbares Speichermedium und durch ein Programm-Element mit den Merkmalen gemäß den unabhängigen Patentansprüchen gelöst.

Gemäß einem Ausführungsbeispiel der vorliegenden Erfindung ist eine (zum Beispiel computergestützte) Vorrichtung zum (virtuellen) Gestalten eines (basierend auf der virtuellen Gestaltung physisch herzustellenden) Formteils geschaffen, wobei die Vorrichtung eine Eingabeeinheit (zum Beispiel eine graphische Benutzerschnittstelle) zum benutzerdefinierten Eingeben von Gestaltungs-Daten zum Definieren des zu gestaltenden Formteils und eine Formteil-Datenbank aufweist, in der eine Mehrzahl von Formteil-Datensätzen gespeichert sind, von denen jeder für ein in der Vergangenheit gestaltetes Formteil kennzeichnend ist. Die Mehrzahl von Formteil-Datensätzen können nach einer Mehrzahl von Formteilklassen klassifiziert sein (insbesondere kann jeder Formteil-Datensatz einer oder mehreren Formteilklassen zugeordnet sein). Die Vorrichtung weist ferner eine Auswahleinheit zum Auswählen von mindestens einem der Formteil-Datensätze als Basis für das Gestalten des Formteils auf, wobei das Auswählen basierend auf den eingegebenen Gestaltungs-Daten und basierend auf den Formteilklassen erfolgt (vorzugsweise erfolgt die Auswahl derart, dass derjenige Formteil-Datensatz ausgewählt wird, der die größte technologische Ähnlichkeit zu den Gestaltungs-Daten aufweist). Ferner weist die Vorrichtung eine Formteilgestaltungseinheit zum prozessorgesteuerten Unterstützen des Gestaltens des Formteils basierend auf dem mindestens einen ausgewählten Formteil-Datensatz auf. Darüber hinaus weist die Vorrichtung eine Werkzeuggestaltungseinheit auf, die zum prozessorgesteuerten Unterstützen des Gestaltens eines Werkzeugs zum physischen Herstellen des gestalteten Formteils eingerichtet ist.

Gemäß einem anderen Ausführungsbeispiel der vorliegenden Erfindung ist ein Verfahren zum Gestalten eines Formteils bereitgestellt, wobei bei dem Verfahren eine benutzerdefinierte Eingabe von Gestaltungs-Daten zum Definieren des zu gestaltenden Formteils empfangen wird und eine Formteil-Datenbank bereitgestellt wird, in der eine Mehrzahl von Formteil-Datensätzen gespeichert sind, von denen jeder für ein in der Vergangenheit gestaltetes Formteil kennzeichnend ist, wobei die Mehrzahl von Formteil-Datensätzen nach einer Mehrzahl von Formteilklassen klassifiziert sind. Bei dem Verfahren wird ferner mindestens einer der Formteil-Datensätze als Basis für das Gestalten des Formteils ausgewählt, wobei das Auswählen basierend auf den eingegebenen Gestaltungs-Daten und den Formteilklassen erfolgt. Ferner wird prozessorgesteuert das Gestalten des Formteils basierend auf dem mindestens einen ausgewählten Formteil-Datensatz unterstützt. Darüber hinaus wird prozessorgesteuert das Gestalten eines Werkzeugs zum physischen Herstellen des gestalteten Formteils unterstützt.

In einem computerlesbaren Speichermedium gemäß einem Ausführungsbeispiel der vorliegenden Erfindung ist ein Programm zum Gestalten eines Formteils gespeichert, welches Programm, wenn es von einem Prozessor ausgeführt wird, die oben beschriebenen Verfahrensschritte aufweist bzw. durchführt.

Ein Programm-Element (Computerprogramm-Element) gemäß einem Ausführungsbeispiel der vorliegenden Erfindung zum Gestalten eines Formteils weist die oben beschriebenen Verfahrensschritte auf (bzw. führt diese durch), wenn es von einem Prozessor ausgeführt wird.

Ausführungsbeispiele der vorliegenden Erfindung können sowohl mittels eines Computerprogramms, das heißt einer Software, als auch mittels einer oder mehrerer spezieller elektrischer Schaltungen, das heißt in Hardware, oder in beliebig hybrider Form, das heißt mittels Software-Komponenten und Hardware-Komponenten, realisiert werden.

Unter einem "Formteil" wird im Rahmen dieser Anmeldung insbesondere eine dreidimensionale Struktur verstanden, welche eine definierte äußere Oberfläche hat und somit eine vorgebbare Form aufweist. Ein solches Formteil kann zum Beispiel mittels Spritzgießens hergestellt werden.

Unter dem Begriff "Gestaltungs-Daten" kann im Rahmen dieser Anmeldung insbesondere technische Information in Form eines Satzes von Parametern verstanden werden, welche zum Charakterisieren des zu gestalteten Formteils dient. Hierunter kann eine Materialeigenschaft, eine genetische Dimension, eine äußere Form definierende Kurve, etc. verstanden werden.

Im Rahmen der vorliegenden Anmeldung kann unter einer "Formteil-Datenbank" eine Datenbank verstanden werden, die als physikalisches Speichermedium ausgestaltet sein kann. Ein solches Speichermedium, zum Beispiel ein Halbleiterspeicher wie zum Beispiel eine Festplatte, kann mit einer Vielzahl von Formteil-Datensätzen gefüllt werden, die unterschiedliche Formteilklassen widerspiegeln können. Jeder Formteil-Datensatz kann somit ein zum Beispiel in der Vergangenheit gestaltetes Formteil kennzeichnen. Basierend auf einem oder mehreren Kriterien kann jeder Formteil-Datensatz einer oder mehreren Formteilklassen zugeordnet sein, wie zum Beispiel einer Produktkategorie. Komponenten einer Formteilklasse können zueinander ähnliche Formteile sein.

Die unterschiedlichen Einheiten, insbesondere Auswahleinheit, Formteilgestaltungseinheit, Werkzeuggestaltungseinheit, Aktualisierungseinheit, Vorhersageeinheit, etc. der Vorrichtung können jeweils als ein Prozessor realisiert sein. Es ist auch möglich, eine beliebige Kombination bzw. Mehrzahl dieser oder anderer Einheiten als gemeinsamen Prozessor auszugestalten. Es können auch alle Einheiten als ein gemeinsamer Prozessor realisiert sein.

Gemäß einem exemplarischen Ausführungsbeispiel der Erfindung kann einem Benutzer ein bedienerfreundliches und intuitives Tool bereitgestellt werden, das den Benutzer bei der Entwicklung eines Formteils technisch unterstützt. Beim Gestalten eines Formteils, insbesondere eines Spritzgussteils, sind eine Fülle technischer Rahmenbedingungen und Anforderungen zu berücksichtigen, die von einem Ingenieur gleichzeitig schwer beherrschbar sind. Ferner sind von einem Ingenieur bei der Gestaltung eines Formteils viele technische Entscheidungen über die Konfiguration des Formteils zu treffen, welche alle einen Einfluss auf die technische Eignung des resultierenden Formteils haben. Erfindungsgemäß kann nun durch einen Benutzer zunächst ein Rahmen des zu gestaltenden Formteils vorgegeben werden. Das erfindungsgemäße System greift dann auf eine Formteil-Datenbank mit technischen Datensätzen von früher entwickelten Formteilen zurück, um dort gestaltete technische Formteile auch für das aktuell zu gestaltende Formteil mitzuverwenden. Damit kann eine von einem Benutzer unbeherrschbare Vielzahl von technischen Parametern gefiltert werden, um ein spezielles Formteil zu gestalten. Ein wichtiger Schritt hierbei ist zunächst eine Verringerung der Datenbasis und dessen spezieller Zuschnitt auf den vorliegenden technischen Anwendungsfall durch Auswahl einer Formteilklasse aus der Formteil-Datenbank, die auf das zu gestaltende Formteil bestmöglich zutrifft. Diese verringerte Anzahl technischer Daten ist dann Ausgangspunkt einer prozessorgesteuerten Optimierung des Formteils, bei der die Formteilgestaltungseinheit die speziell auf die einschlägige Formteilklasse bezogene technische Information verwendet, um das Formteil bestmöglich anzupassen. Überdies kann auch die Gestaltung eines geeigneten Werkzeugs zum Herstellen des zu gestaltenden Formteils prozessorgesteuert erfolgen. Hierzu kann wiederum auf entsprechende empirische Werkzeugdaten in der Formteil-Datenbank zurückgegriffen werden. Anders ausgedrückt kann in den Formteil-Datensätzen auch werkzeugspezifische Information enthalten sein, das heißt eine Korrelation eines in der Vergangenheit hergestellten Formteils zu einem in der Vergangenheit zur dessen Herstellung eingesetzten Werkzeugs. Bei der Gestaltung eines Formteils ist es nicht nur wesentlich, dieses Formteil zu designen, sondern auch ein Werkzeug oder eine Apparatur zu definieren, mittels welcher das gestaltete Formteil herstellbar ist. Die Gestaltung des Werkzeugs kann vor dem Gestalten des Formteils, nach dem Gestalten des Formteils oder vorzugsweise simultan oder parallel zu dem Gestalten des Formteils erfolgen. Durch koordinierte Abstimmung von Formteileigenschaften und Werkzeugeigenschaften können übergeordnete Designkriterien, zum Beispiel eine Kostenobergrenze oder eine technische Rahmenbedingung, während des Gestaltungsprozesses berücksichtigt werden.

Bei der erfindungsgemäßen Gestaltung des Formteils wird dieses zunächst virtuell gestaltet, das heißt es wird ein Datensatz oder Parametersatz gebildet, welcher dann als Vorlage für das praktische Herstellen eines physischen Formteils dient.

Im Folgenden werden bevorzugte Weiterbildungen der Vorrichtung beschrieben. Diese gelten auch für das Verfahren, das computerlesbare Speichermedium und das Programmelement.

Gemäß einem exemplarischen Ausführungsbeispiel kann die Vorrichtung zum Gestalten eines Spritzgussteils als Formteil ausgestaltet sein. Insbesondere ein spritzgegossenes Kunststoffformteil kann erfindungsgemäß vorteilhaft gestaltet werden. Speziell in der Spritzguss-Technologie sieht sich der Ingenieur einer Vielzahl von technischen Rahmenbedingungen, Anforderungen und Schwierigkeiten ausgesetzt, wenn ein neues Formspritzgussteil zu gestalten ist. Erfindungsgemäß kann dann von Expertenwissen der Spritzgussdatenbank vorteilhaft Gebrauch gemacht werden, indem zunächst die Spritzgussdatenbank nach einem passenden Spritzguss-Datensatz durchsucht wird, um eine für das zu gestaltende Spritzgussteil passende Spritzgussteilklasse zu ermitteln. Diese Reduktion des Datenraums erlaubt es dem Ingenieur dann auf einen bereits in vielen Fällen überschaubaren Parametersatz zuzugreifen, der eine Reihe technischer Informationen liefert, die bei der Gestaltung speziell des zu gestaltenden Spritzgussteils hilfreich sind. Das System führt den Ingenieur derart durch die zu erfüllenden Anforderungen, dass wichtige technische Eigenschaften des Spritzgussteils, wie zum Beispiel Schwindung und Verzug, passend ausgewählt werden können.

Gemäß einem exemplarischen Ausführungsbeispiel kann die Formteilgestaltungseinheit beim Gestalten des Formteils zum Überwachen des Einhaltens mindestens eines Kriteriums bezüglich Schwindung und Verzug des Formteils eingerichtet sein. Unter "Schwindung" kann eine Volumenverringerung eines Materials oder Werkstücks verstanden werden, ohne dass Material entfernt wird und ohne dass Druck ausgeübt wird. Speziell bei Spritzgussteilen kann Schwindung durch Trocknung, Abkühlung oder chemisch/physikalische Umbaumechanismen im Material stattfinden. Unter dem Begriff "Verzug" kann die Änderung der Masse und die Form eines Werkstücks verstanden werden, beispielsweise durch unerwünschte chemische Einwirkung. Schwindung und Verzug sind typische Probleme bei Spritzgussteilen, so dass die Gestaltung des Spritzgussteils erfindungsgemäß dahingehend überwacht werden kann, ob Schwindung und/oder Verzug des zu gestaltenden Formteils einem vordefinierbaren Kriterium entsprechen. Zum Beispiel kann ein Benutzer ein Toleranzmaß oder ein Qualitätskriterium definieren, dessen Einhaltung dann von dem System überwacht wird. Sollte das Design des Formteils solchen Kriterien nicht genügen, kann der Entwickler frühzeitig vor entsprechenden unerwünschten Folgen einer solchen Abweichung von Solleigenschaften gewarnt. Bevorzugt greift das System dabei auf Datenbankinformationen hinsichtlich Schwindung und Verzug der in der Vergangenheit gestalteten Formteile zurück. Alternativ oder ergänzend können Simulationsroutinen Schwindung und Verzug simulieren und dem Entwickler die Simulationsergebnisse präsentieren. Allerdings ist es in vielen Fällen realitätsnäher, die empirischen Expertendaten aus der Datenbank zu verwenden, da Schwindung und Verzug häufig nur schwierig mit ausreichenden Präzession simulierbar sind.

Die Formteilgestaltungseinheit kann zum Gestalten des Formteils und/oder eines zu dessen Herstellung einsetzbaren Werkzeugs rekursiv auf den mindestens einen ausgewählten Formteil-Datensatz zugreifen. Hierbei sollte die Anzahl der zum Erreichen einer vorgebbaren Mindestgüte erforderlichen Rekursionen dadurch gering gehalten werden, dass auf den jeweils am besten passenden Formteil-Datensatz zurückgegriffen wird. Die so genannten Rekursionsschleifen, das sind die Werkzeugänderungsschleifen, sollen mit dem System minimiert werden, da die Anzahl der Schleifen mit Kosten und Zeit verbunden sind. Das Ziel ist, auf so gute Formteil-Datensätze zurückgreifen zu können, dass keine Nacharbeit bzw. keine Rekursionsschleife am Werkzeug erforderlich wird. Dabei kann das System sich iterativ einer Sollkonfiguration annähern, indem in jeder Rekursion oder Iteration erhaltene Eigenschaften nur dann akzeptiert werden, wenn sie eine Verbesserung gegenüber dem vorherigen Durchlauf darstellen. Sie können dagegen verworfen werden, wenn sie eine Verschlechterung bewirken würden. Das System kann den Benutzer anleiten, eine Rekursion so häufig durchzuführen, bis eines oder mehrere Kriterien erfüllt sind.

Gemäß einem bevorzugten Ausführungsbeispiel kann die Formteilgestaltungseinheit eingerichtet sein, das gestaltete Formteil hinsichtlich mindestens eines vorgebbaren Fehlerkriteriums zu analysieren und bei Auffinden eines Fehlers eine vorgebbare Maßnahme einzuleiten. Zum Beispiel kann das Ereignis des Erkennens eines Fehlers einem Benutzer angezeigt werden, zum Beispiel in Form eines Alarms. Es ist auch möglich, eine Fehlerbehebungsmaßnahme einzuleiten, zum Beispiel in Form eines Vorschlags für eine abweichende technische Gestaltung des Formteils, mit welcher der Fehler vermieden werden kann. Somit kann ein Fehlererkennungs- und Fehlerbeseitigungssystem in der Vorrichtung integriert werden. Es kann bei der Gestaltung eines komplexen Formteils durchaus passieren, dass ein Ingenieur mehrere Rahmenbedingungen im Auge behält, dabei jedoch bestimmte Fehlerquellen unbeachtet lässt. Durch die prozessorunterstützte Gestaltung des Formteils kann einmalig, periodisch oder dauernd eine Fehleranalyse durchgeführt werden und bei Ermittlung eines Fehlers ein Benutzer unmittelbar informiert werden. Mittels eines entsprechenden Spritzgießfehlerkatalogs, der auch in der Datenbank hinterlegt sein kann, kann daher eine ausreichende Mindestqualität des zu gestaltenden Formteils garantiert werden. Basierend auf der Expertendatenbank kann anschaulich aus Fehlern der Vergangenheit gelernt werden, indem bei Auftreten eines solchen Fehlers ein Lösungsvorschlag angeboten wird, der in der Vergangenheit für den entsprechenden Fehler erfolgversprechend war. Fehler können als ausreichend starke Abweichung einer Sollbeschaffenheit des Formteils gegenüber einer Istbeschaffenheit hinsichtlich eines oder mehrerer Parameter aus der Gruppe einer Dimension, eines Entformungsverhaltens, einer Farbe, einer mechanischen Eigenschaft, einer Oberflächenbeschaffenheit, einer Oberflächenrauheit, etc. bezeichnet werden.

Gemäß einem exemplarischen Ausführungsbeispiel kann die Formteilgestaltungseinheit eingerichtet sein, das gestaltete Formteil hinsichtlich mindestens eines vorgebbaren Herstellungsaufwandkriteriums zu untersuchen. In einem Szenario, in dem der Aufwand für ein Formteil durch ein externes Kriterium, zum Beispiel ein Kostenkriterium, beschränkt ist, kann die Vorrichtung die zu erwartenden Gesamtkosten zum Gestalten des Formteils überwachen und einem Benutzer einen entsprechenden Hinweis geben, wenn ein vorgebbarer Maximalaufwand überschritten ist. Dadurch kann vermieden werden, dass ein Formteil gestaltet wird, das zwar theoretischen Kriterien genügt, aber einer praktischen Rahmenbedingung zuwider läuft. Die Überschreitung eines vorgebbaren Herstellungsaufwandskriteriums kann anstelle des Alarmierens des Benutzers auch zu der alternativen oder ergänzenden Maßnahme führen, dass die Vorrichtung einen Änderungsvorschlag erstellt, der einem oder mehreren technischen Kriterien entspricht, aber auch dazu führt, dem Herstellungsaufwandkriterium zu genügen. Zum Beispiel kann ein alternativer Materialvorschlag gemacht werden, wenn ein gestaltetes Formteil aufgrund teurer Materialien einen vorgegebenen Kostenrahmen sprengt.

Die Auswahleinheit kann ferner zum Auswählen von mindestens einem der Formteil-Datensätze basierend auf einer Ähnlichkeit des zu gestaltenden Formteils mit einem jeweiligen Formteil-Datensatz zugeordneten Formteil eingerichtet sein. Um auszuwählen, welcher der Formteil-Datensätze am besten mit einem zu gestaltenden Formteil übereinstimmt, kann zumindest ein Ähnlichkeitskriterium angewendet werden. Ein solches Ähnlichkeitskriterium kann zum Beispiel eine Technologie des zu gestaltenden Formteils, ein Einsatzgebiet des zu gestaltenden Formteils, ein von dem zu gestaltenden Formteil einzuhaltender Industriestandard, eine von dem zu gestaltenden Formteil einzuhaltende Mindestbelastung, ein Materialkriterium, eine Bezeichnung des Formteils, eine Patentklasse (IPC-Klasse), etc. sein. Anhand dieses Ähnlichkeitskriteriums kann die Auswahleinheit ermitteln, welcher der Datensätze den technischen Anforderungen an das zu gestaltende Formteil am ehesten entspricht. Die Anwendung eines oder mehrerer solcher Kriterien kann die Zuverlässigkeit beim Auswählen der passenden Formteilklasse erhöhen und somit den Datensatz in der Datenbank auf diejenige Teilmenge begrenzen, die technologisch dem zu gestaltenden Formteil am ähnlichsten ist. Dadurch können die technisch relevantesten Daten dem Ingenieur für die Gestaltung eines Formteils an die Hand gegeben werden.

Die Auswahleinheit kann zum Auswählen des mindestens einen der Formteil-Datensätze basierend auf einem Vergleich einer Werkzeugfamilie zum Herstellen des zu gestaltenden Formteils mit einer Werkzeugfamilie zum Herstellen des einem jeweiligen Formteil-Datensatz zugeordneten Formteils eingerichtet sein. Somit kann bei Auswahl passender Formteil-Datensätze auch nicht nur das Formteil selbst, sondern auch ein Werkzeug zum Herstellen des Formteils berücksichtigt und gestaltet werden. Die Kombination von Werkzeugfamilie und Formteilfamilie kann die Zuverlässigkeit der Auswahl der relevanten technischen Datensätze signifikant erhöhen.

Die Werkzeuggestaltungseinheit kann zum Gestalten des Werkzeugs basierend auf einer in der Mehrzahl von Formteil-Datensätzen enthaltenen Werkzeugbauart eingerichtet sein, welche Werkzeugbauart einem zugehörigen in der Vergangenheit gestalteten Formteil zugeordnet ist. Bei Zusammenwirken von Formteilgestaltungseinheit und Werkzeuggestaltungseinheit werden mit dem System die verschiedensten Formteile nach Formteilklassen eingeteilt, und es kann die Erkenntnis verwendet werden, dass geometrisch und physikalisch ähnliche Bauteile, wenn die gleiche Werkzeugbauart verwendet wird, ähnliches Schwindungs- und Verzugsverhalten zeigen werden. Die Klassifizierung der Formteile erlaubt auch schon im Vorfeld die Bestimmung der Werkzeugbauart für die Herstellung der Formteile. Als Werkzeugbauarten können zum Beispiel Backenwerkzeuge, Abstreifplattenwerkzeuge, Kernzugwerkzeuge genannt werden, das heißt die hier entwickelte Klassifizierung des Formteils kann auch die Werkzeugbauart festlegen. Die Geometrie der Kavität im Werkzeug legt letztendlich mit den Prozessführungsdaten der Spritzgießmaschine und des Werkzeuges die Geometrie des Formteils fest. Oder anders ausgedrückt: Die Geometrie der Werkzeugkavität soll so ausgelegt werden, dass die Soll-Formteilgeometrie trotz Schwindung und Verzug am Formteil erzielt wird.

Die Vorrichtung kann ferner eine Aktualisierungseinheit aufweisen, die nach Fertigstellung des Gestaltens zum Aktualisieren der Formteil-Datenbank durch Speichern eines das gestaltete Formteil kennzeichnenden Formteil-Datensatzes in der Formteil-Datenbank eingerichtet ist. Nach Abschluss der Gestaltung von Formteil und/oder Werkzeug kann ein entsprechender Datensatz in die Formteil-Datenbank eingespeichert werden, um den Umfang der darin enthaltenen Daten zu erweitern und somit die Formteil-Datenbank für zeitlich nachfolgende Gestaltungen anderer Formteile sukzessive zu verbessern. Dadurch kann anschaulich ein sich selbst erneuerndes und sich selbst laufend ergänzendes und verbesserndes System geschaffen werden, oder anders ausgedrückt, die Expertendatenbank laufend aktualisiert werden. Damit kann die Basis technischer Datensätze, die zum Gestalten von Formteilen und/oder Werkzeugen verwendet werden, laufend verbessert werden.

Die Vorrichtung kann eine Vorhersageeinheit aufweisen, die zum Vorhersagen von Schwindung und Verzug des gestalteten Formteils, insbesondere eines gestalteten Spritzgussteils, basierend auf Daten in der Formteil-Datenbank eingerichtet sein kann. Eine solche Vorhersageeinheit kann einmalig, periodisch oder dauerhaft Schwindungs- und Verzugseigenschaften des Werkzeugs ausrechnen und dem Benutzer mitteilen. Schwindung und Verzug sind insbesondere im Bereich des Spritzgusses diejenigen Parameter, die hinsichtlich der Qualität und Brauchbarkeit des zu gestaltenden Formteils signifikant sind. Sollten Schwindung bzw. Verzug außerhalb eines vorgebbaren Toleranzbereichs liegen, so kann bereits in einer frühen Formteilentwicklungsphase ein Benutzer auf dieses Problem hingewiesen werden und gegebenenfalls einen Vorschlag für ein abweichendes Formteil dem Benutzer unterbreitet werden, um Schwindungs- und Verzugseigenschaften innerhalb gewünschter Grenzen zu halten.

Im Folgenden werden exemplarische Ausführungsbeispiele der vorliegenden Erfindung mit Verweis auf die folgenden Figuren detailliert beschrieben.
Fig. 1 zeigt ein computerbasiertes System zum Gestalten eines Spritzgussteils gemäß einem exemplarischen Ausführungsbeispiel der Erfindung.
Fig. 2 ist eine schematische Darstellung von Rahmenbedingungen, die beim Gestalten eines Formteils gemäß einem exemplarischen Ausführungsbeispiel der Erfindung berücksichtigt werden können.
Fig.3 ist ein Flussdiagramm, das ein Verfahren zum Gestalten eines Spritzgussteils gemäß einem exemplarischen Ausführungsbeispiel der Erfindung zeigt.
Fig. 4 ist eine Darstellung, welche die Auswahl einer Formteilklasse im Rahmen der Auswahl eines Formteil-Datensatzes aus einer Formteil-Datenbank gemäß einem exemplarischen Ausführungsbeispiel der Erfindung zeigt.
Fig. 5 und Fig. 6 zeigen Computerfenster eines computergestützten Systems zum Gestalten eines Spritzgussteils, in welchen ein Benutzer aus einem Bauteilkatalog auswählen kann.
Fig. 7 bis Fig. 16 zeigen Computerfenster eines computergestützten Systems zum Gestalten eines Formteils gemäß einem exemplarischen Ausführungsbeispiel der Erfindung, die den Zugriff auf eine Schwindungsdatenbank betreffen.
Fig. 17 zeigt anschaulich einen Prozessfluss zum Gestalten eines Formteils gemäß einem exemplarischen Ausführungsbeispiel der Erfindung.
Fig. 18 zeigt ein Fig. 17 zugehöriges Modul 3D-Formteildesign Urmodell.
Fig. 19 und Fig. 20 zeigen Computerfenster, welche dem Modul von Fig. 18 zugeordnet sind.
Fig. 21 zeigt ein Fig. 17 zugehöriges Modul betreffend eine Formteilklassifizierung und Zuordnung einer Werkzeugtechnik.
Fig. 22 illustriert einen Kodierungsschlüssel für die Zuordnung zu verschiedenen Formteilfamilien gemäß einem exemplarischen Ausführungsbeispiel der Erfindung.
Fig. 23 zeigt ein zu Fig. 22 zugehöriges Computerfenster für eine Formteilklassifizierung.
Fig. 24 zeigt ein Computerfenster, das einem zu gestaltenden Bauteil ähnliche Bauteile aus einem Formteilkatalog anzeigt.
Fig. 25 zeigt ein Fig. 17 zugehöriges Modul zur Überprüfung der Bauteilkonstruktion.
Fig. 26 zeigt ein Computerfenster als Basis für eine Zykluszeitberechnung betreffend das Modul aus Fig. 25.
Fig. 27 zeigt ein Fig. 17 zugehöriges Modul betreffend ein werkzeuggerechtes 3D-Modul.
Fig. 28 zeigt ein Fig. 27 zugehöriges Computerfenster betreffend eine Materialschwindung mit einem Link zu einer Schwindungsdatenbank.
Fig. 29 illustriert ein Fig. 17 zugehöriges Modul 3D Werkzeugkonstruktion.
Fig. 30 illustriert ein Fig. 17 zugehöriges Modul Analyse der Werkzeugkonstruktion.
Fig. 31 illustriert ein Fig. 17 zugehöriges Modul Werkzeugfertigung.
Fig. 32 illustriert ein Fig. 17 zugehöriges Modul Werkzeugbemusterung.
Fig. 33 zeigt ein Computerfenster, das dem Modul aus Fig. 32 zugeordnet ist.
Fig. 34 zeigt ein Computerfenster betreffend ein Formular Maschineneinstellungen, das Fig. 32 zugeordnet ist.
Fig. 35 zeigt ein Computerfenster, das einem Spritzgießfehlerkatalog gemäß Fig. 32 zugeordnet ist.
Fig. 36 zeigt ein Fig. 17 zugehöriges Modul betreffend Formteilvermessung.
Fig. 37 zeigt ein Fig. 36 zugehöriges Modul Werkzeugrekursion.
Fig. 38 zeigt ein Computerfenster betreffend eine Werkzeugänderung.
Fig. 39 ist eine schematische Darstellung der Einleitung von Werkzeugrekursionsschleifen und einer möglichen Rückkopplung zu vorausgegangenen Modulen.
Fig. 40 ist ein Fig. 17 zugehöriges Computerfenster betreffend ein Modul Projektdokumentation.

Gleiche oder ähnliche Komponenten in unterschiedlichen Figuren sind mit gleichen Bezugsziffern versehen.

Gemäß einem Ausführungsbeispiel der Erfindung ist ein Expertensystem bzw. eine Wissensdatenbank für die Herstellung spritzgegossener Kunststoffformteile, vom Design bis zum qualitätsgeprüften Formteil, geschaffen.

Insbesondere ist ein Hilfsmittel zur Werkzeugkonstruktion vom Design bis zum qualitätsgeprüften Formteil inklusive Dokumentation der gesamten Abläufe bereitgestellt. Ein Benutzer wird in den Vorgehensabläufen geführt. Erfolg und Misserfolg können transparent dokumentiert und jederzeit nachvollzogen werden. Ein solches datenbankgestütztes Spritzgussdesigntool kann beliebig, benutzerspezifisch ergänzt werden. Literaturdokumentation und -aufarbeitung mit Schnellinformationen für jüngere, neue oder weniger erfahrene Benutzer kann bereitgestellt werden. Die Dokumentation kann benutzerspezifisch ergänzt werden.

Berücksichtigt werden kann insbesondere die Ermittlung von Schwindung und Verzug an vielen spritzgegossenen Kunststoffformteilen mit Spritzgießsimulationsprogrammen und einer 3D-Messtechnik. Die Datenbank kann Daten betreffend sehr unterschiedliche Bauteile mit allen Änderungsmaßnahmen (Rekursionsschleifen) am Werkzeug und Formteil enthalten. Eine Formteilklassifizierung erlaubt eine systematische Zuordnung eines Werkzeugtyps zu einem Formteil. Eine Standardisierung der Werkzeugaufbauten ist möglich. Erkenntnisse zum Umspritzen von Einlegeteilen, zum Beispiel Gewindebuchsen im Formteil aus anderen oder gleichen Werkstoffen, ist möglich. Vorgaben für die Abmusterung und Produktionseinführung der neuen Werkzeuge können berücksichtigt werden. Ein interaktives Spritzgießfehler-Diagnosetool (Vorschlag von Abhilfemaßnahmen bei Spritzgießfehlern an den Formteilen) kann implementiert sein. Mehrkomponentenspritzgießtechnik, Haftverbindungen verschiedener Funktionspolymere, Montagespritzguss (nicht haftende Polymere werden in einem Werkzeug verarbeitet, Beispiel: bewegliches Luftschlitzgitter am Armaturenbrett des PKWs) können einfließen. Firmenspezifische Werkzeugkostenkalkulation bzw. bisherige Kalkulationsdaten können implementiert werden und können über firmenspezifische Schnittstellen eingelesen werden. Berechnungsprogramme zur Hilfestellung der Produktionstechnik können ebenfalls eingebunden werden.

Vorteilhafte Aspekte des Systems zum Gestalten von Spritzgießteilen können somit eines oder mehrere der folgenden Merkmale enthalten:
- Die Verminderung von Schwindung und Verzug bei mittels Spritzgießens hergestellten Werkstücken durch eine Software-basierte Optimierungsplattform.
- Die Einrichtung einer Datenbank mit einer Vielzahl von Formteilfamilien (zum Beispiel Formteilfamilie der Scheinwerfergehäuse) mit zugehörigen Daten hinsichtlich Schwindungs- und Verzugsverhalten. Für die Entwicklung eines neuen Formteils kann dann eine jeweilige Formteilfamilie ausgewählt und auf die entsprechenden Erfahrungen mit Schwindung und Verzug in dieser Formteilfamilie zurückgegriffen werden.
- Das Bereitstellen einer Rekursionsschleife zum Einstellen eines Eigenschaftsprofils eines Werkzeugstücks unter Einsatz einer Wissensdatenbank.
- Ein Optimierungstool, das eine Abwägung zwischen technischer Qualität und Kosten eines Werkzeugstücks ermöglicht.
- Ein Fehlerfindungstool, das Spritzgießfehler diagnostizierbar macht, um die Qualität zu gestaltender Werkzeugstücke zu verbessern.

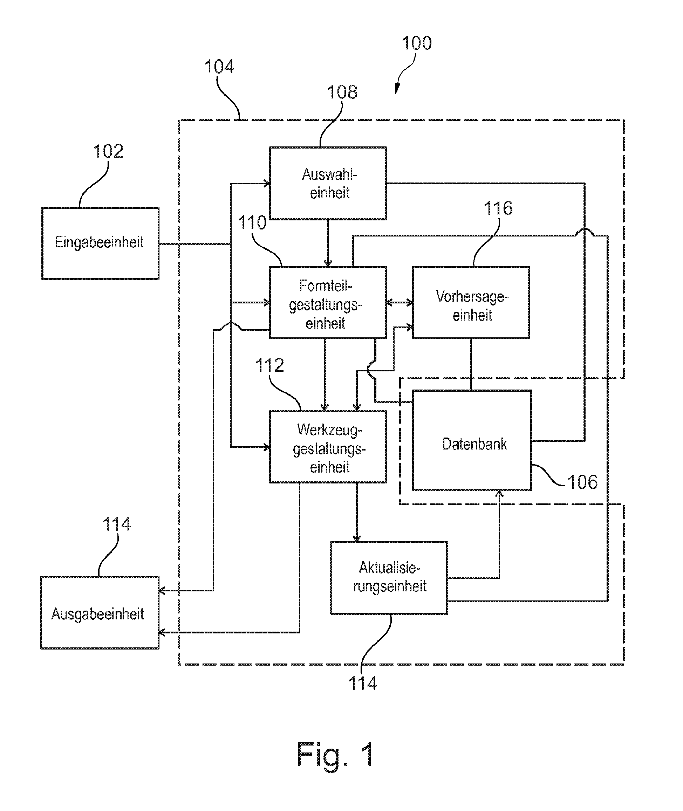

**Fig. 1** zeigt ein Computersystem 100 zum virtuellen, computergestützten Gestalten eines Formteils gemäß einem Ausführungsbeispiel der Erfindung. Das System 100 kann verwendet werden, wenn ein Ingenieur oder sonstiger Benutzer ein Formteil gestalten möchte und dieses in effizienter Weise und unter angemessener Berücksichtigung aller technischen Rahmenbedingungen gestalten möchte.

Mittels einer Eingabeeinheit 102 kann der Benutzer Gestaltungs-Daten zum Definieren des zu gestaltenden Formteils eingeben. Mit anderen Worten können technische Parameter definiert werden, die für das zu gestaltende Formteil einzuhalten sind. So kann eine Funktion, ein Maß, ein Material, eine räumliche Form, ein Anwendungsgebiet, etc. oder eine Kombination solcher Gestaltungs-Daten mittels der Eingabeeinheit 102 eingegeben werden. Die Eingabeeinheit 102 kann Eingabeelemente wie eine Tastatur, einen Joystick, eine Computermaus, einen Trackball oder ein Spracherkennungssystem aufweisen. Die Eingabeeinheit 102 kann diese Daten einem Prozessor 104 bereitstellen. Ferner können in einem elektronischen Massenspeicher 106 solche und andere Daten gespeichert werden. Eine Formteil-Datenbank ist ebenfalls in dem elektronischen Massenspeicher 106 gespeichert. Die Formteil-Datenbank enthält eine Vielzahl von Formteil-Datensätzen, von denen jeder für ein in der Vergangenheit gestaltetes Formteil kennzeichnend ist. Die Formteil-Datensätze sind nach Formteilklassen klassifiziert. Solche Formteilklassen können technische Bauteile bezeichnen, zum Beispiel "Kraftfahrzeugpaneete" oder "Ventile". Somit kann in der Formteil-Datenbank jeder Formteil-Datensatz in eine bestimmte Formteilklasse eingeteilt oder gruppiert sein. Sollte ein Formteil-Datensatz zu mehreren Formteilklassen passen, so kann ein solcher Formteil-Datensatz auch allen diesen Formteilklassen zugeordnet werden.

Eine Auswahleinheit 108 des Computersystems 100 kann als Teilkomponente des Prozessors 104 ausgestaltet sein und kann auf den elektronischen Massenspeicher 106 zugreifen, um mindestens einen der Formteil-Datensätze als Basis für das Gestalten des benutzerdefinierten Formteils auszuwählen. Bei diesem Auswählen einer ähnlichsten Formteilklasse für das zu gestaltende Formteil können die von dem Benutzer mittels der Eingabeeinheit 102 eingegebenen Gestaltungs-Daten als Auswahlkriterium eingesetzt werden.

Die Auswahleinheit 108 kann ferner die Auswahl von einem oder mehreren Formteil-Datensätzen basierend darauf durchführen, dass eine Werkzeugfamilie zum Herstellen des zu gestaltenden Formteils mit einer Werkzeugfamilie zum Herstellen eines dem jeweiligen Formteil-Datensatz zugeordneten Formteils zueinander passen.

Eine Formteilgestaltungseinheit 110, die in dem gezeigten Ausführungsbeispiel eine andere Komponente des Prozessors 104 bildet, ist zum prozessorgesteuerten unterstützenden Gestalten des Formteils basierend auf dem mindestens einen ausgewählten Formteil-Datensatz eingerichtet. Die Formteilgestaltungseinheit 110 kann von der Eingabeeinheit 102 mit den eingegebenen Gestaltungs-Daten versorgt werden und kann als weitere Eingabe ein Auswahlergebnis der Auswahleinheit 108 erhalten. Bei dem Gestalten des Formteils kann die Formteilgestaltungseinheit 110 mindestens ein Kriterium bezüglich Schwindung und Verzug des Formteils ständig überwachen und eine Gestaltung des Formteils nur dann zulassen, wenn diese Rahmenbedingungen eingehalten werden. Solche Rahmenbedingungen können mittels der Eingabeeinheit 102 definiert werden oder können eine Folge der Auswahl der Auswahleinheit 108 sein, wenn für eine bestimmte Formteilklasse bestimmte Vorgaben einzuhalten sind. Auch können Informationen aus der Datenbank 106, die in dem elektronischen Massenspeicher 106 gespeichert sind, im Rahmen einer solchen Untersuchung von Schwindung und Verzug eingesetzt werden.

Die Formteilgestaltungseinheit 110 kann beim Gestalten des Formteils mittels einer Rekursionsschleife den Zugriff auf die Datenbank, die Auswahl der Auswahleinheit 108, etc. wiederholen. Die Formteilgestaltungseinheit 110 kann ferner das zu gestaltende Formteil hinsichtlich mindestens eines vorgebbaren Fehlerkriteriums analysieren. Nur wenn dieses Fehlerkriterium eingehalten bleibt, das heißt das gestaltete Formteil entsprechend fehlerfrei gestaltet ist, wird dies durch die Formteilgestaltungseinheit 110 akzeptiert. Anderenfalls kann eine Fehlervermeidungsroutine (nicht gezeigt in Fig. 1) eingeleitet werden. Die Formteilgestaltungseinheit 110 kann bei der Gestaltung des Formteils ferner mindestens ein vorgebbares Herstellungsaufwandkriterium analysieren, zum Beispiel maximale Herstellungskosten des herzustellenden Formteils. Die maximalen Herstellungskosten können benutzerseitig in Form der Gestaltungs-Daten vorgegeben werden. Sollte ein gestaltetes Formteil solche Maximalkosten überschreiten, kann die Formteilgestaltungseinheit 110 das gestaltete Formteil verwerfen oder einen Alternativvorschlag machen, wie durch eine Modifikation (zum Beispiel Wahl eines günstigeren Materials oder Herstellungsverfahrens) die Kosten unter die Kostengrenze gedrückt werden können.

Eine Werkzeuggestaltungseinheit 112 ist in Fig. 1 der Formteilgestaltungseinheit 110 nachgeschaltet und kann mit einer Ausgabe der Formteilgestaltungseinheit 110 gefüttert werden. Alternativ können Formteilgestaltungseinheit 110 und Werkzeuggestaltungseinheit 112 auch zeitlich synchron arbeiten und ein Formteil und ein zugehöriges Werkzeug zum Herstellen eines solchen Formteils gemeinsam abgleichen. Gemäß dem gezeigten Ausführungsbeispiel ist das Formteil durch die Formteilgestaltungseinheit 110 definiert, so dass die Werkzeuggestaltungseinheit 112 dann die Aufgabe hat, ein zugehöriges Herstellungswerkzeug zu gestalten.

Fig. 1 zeigt ferner eine Vorhersageeinheit 116, die zum Vorhersagen von Schwindung und Verzug des gestalteten Formteils basierend auf Daten in der Formteil-Datenbank eingerichtet ist. Die Vorhersageeinheit 116 kann mit der Formteilgestaltungseinheit 110 bzw. mit der Werkzeuggestaltungseinheit 112 bidirektional kommunizieren, so dass zum Beispiel Schwindung und Vollzug von der Vorhersageeinheit 116 laufend überwacht werden und die Formteilgestaltung bzw. die Werkzeuggestaltung entsprechende Rahmenbedingungen zuverlässig erfüllt.

Daten, die das gestaltete Formteil charakterisieren und das gestaltete Werkzeug charakterisieren, können von den Gestaltungseinheiten 110, 112 einer Ausgabeeinheit 114 zugeführt werden, zum Beispiel einem graphischen Anzeigegerät, oder können in einer Datei gespeichert werden. Diese Daten erlauben dann die praktische Realisierung, das heißt physische Herstellung, des Formteils unter Einsatz des gestalteten Werkzeugs.

Eine Aktualisierungseinheit 114 ist in Fig. 1 ebenfalls als Teil des Prozessors 104 gezeigt. Die Aktualisierungseinheit 114 kann nach Fertigstellung des Gestaltens zum Aktualisieren der Formteil-Datenbank einen das gestaltete Formteil kennzeichnenden Formteil-Datensatz in der Formteil-Datenbank speichern. Somit kann nach Design von Formteil und/oder Werkzeug ein entsprechender Datensatz in die Datenbank aufgenommen werden, das heißt in dem elektronischen Massenspeicher 106 gespeichert werden. Dadurch wird die Basis der Expertendaten, auf die in der Zukunft beim Gestalten anderer Formteile zugegriffen werden kann, sukzessive erweitert.

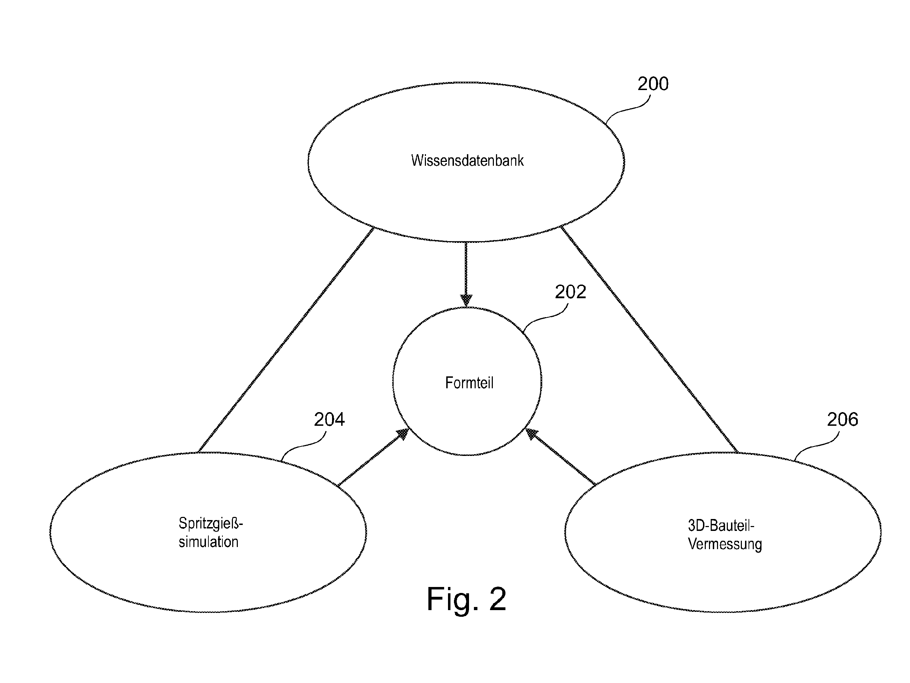

**Fig. 2** zeigt schematisch, dass eine Wissensdatenbank 200, die mit dem System 100 eingebunden werden kann, zur Gestaltung eines Formteils 202 dienen kann, wobei bei einem Verfahren gemäß einem exemplarischen Ausführungsbeispiel der Erfindung simultan eine Spritzgusssimulation 204 und/oder eine dreidimensionale Bauteilvermessung 206 erfolgen können. Somit kann synergistisch das expertenbasierte System 200 mit einer experimentellen Untersuchung eines zu gestaltenden Formteils 202 verbunden werden, insbesondere mittels Spritzgusssimulation und/oder einer realen Bauteilvermessung.

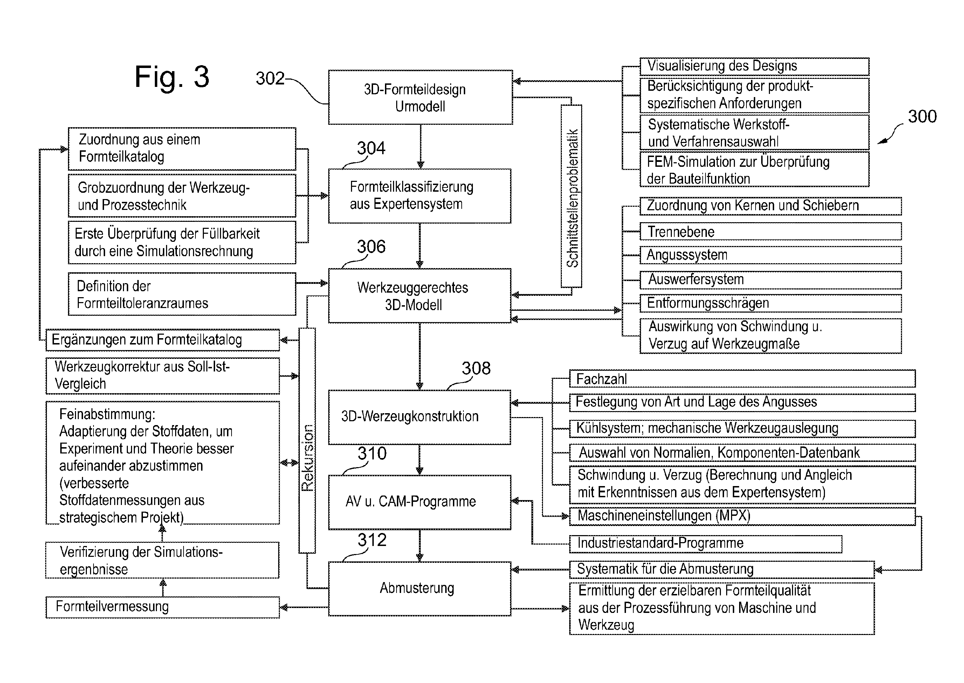

**Fig. 3** zeigt schematisch ein Flussdiagramm 300, das mit einem System wie dem in Fig. 1 gezeigten abgearbeitet werden kann.

Auf einem Block 302, in dem ein Urmodell eines dreidimensionalen Formteils virtuell gestaltet wird, folgt eine Formteilklassifizierung 304 unter Einsatz eines Expertensystems. Bei Block 304 kann die Auswahleinheit 108 die Formteilklassifizierung unterstützen. Dann kann, siehe Block 306, ein werkzeuggerechtes dreidimensionales Modell des zu gestaltenden Formteils erstellt werden. Dem kann sich, siehe Block 308, eine dreidimensionale Werkzeugkonstruktion anschließen. Block 310 zeigt, dass die gestalteten Komponenten dann einer programmtechnischen Analyse unterzogen werden können. Block 312 zeigt eine Abmusterung. In Fig. 3 sind eine Vielzahl von weiteren Maßnahmen und einzelne Maßnahmen der gezeigten Blöcke gezeigt, die sich auf exemplarische Ausführungsbeispiele der Erfindung beziehen.

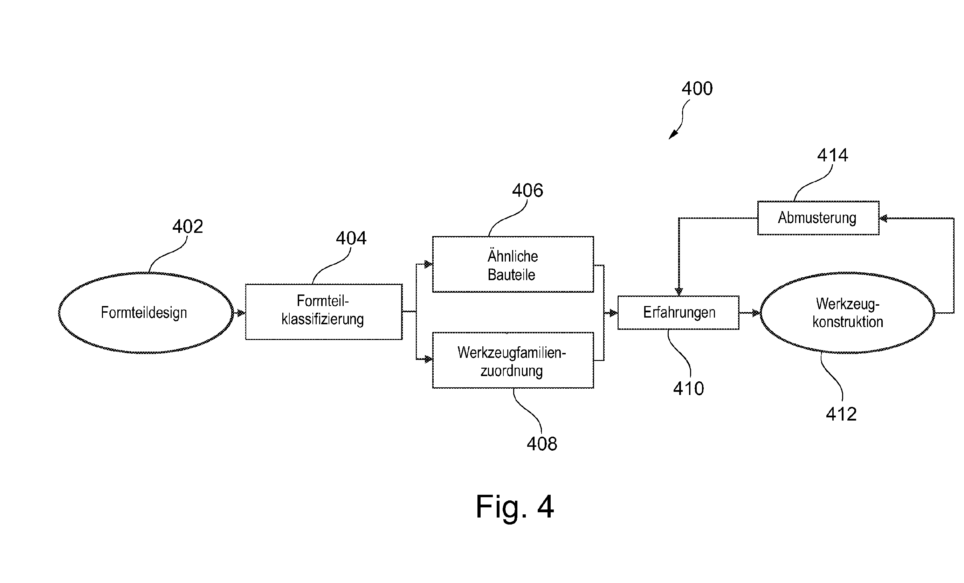

**Fig. 4** zeigt ein Schema 400, das einem logischen Ablaufdiagramm zur Gestaltung des Formteils entspricht.

Wie Block 402 zeigt, wird zunächst ein Formteil gestaltet und in Block 404 klassifiziert. Klassifizierungskriterien können dabei die Ähnlichkeit zu bereits vorhandenen Bauteilen sein, siehe Block 406, und/oder die Zugehörigkeit eines Werkzeugs zum Herstellen eines bestimmten Formteils zu einer Werkzeugfamilie, vergleiche Block 408. Erfahrungsdaten können, siehe Block 410, in die Gestaltung des Formteils einfließen. Anders ausgedrückt kann auf Erfahrungen mit in der Vergangenheit gestalteten Formteilen zurückgegriffen werden, können entsprechende Ergebnisse verwertet werden und kann eine Wiederholung von Fehlern vermieden werden. Die Formteilgestaltung mündet in der entsprechenden Werkzeugkonstruktion, siehe Block 412. Block 414 zeigt eine zugehörige Abmusterung.

Mit dem in Fig. 4 gezeigten Schema 400 ist eine Reduzierung von Konstruktionszeiten und Rekursionsschleifen durch eine konsequente Nutzung von Expertenwissen und Erfahrungen aus früher abgewickelten Projekten möglich.

Im Weiteren werden Computerfenster für ein computerimplementiertes Ausführungsbeispiel des erfindungsgemäßen Systems zum Gestalten eines Spritzgussteils beschrieben.

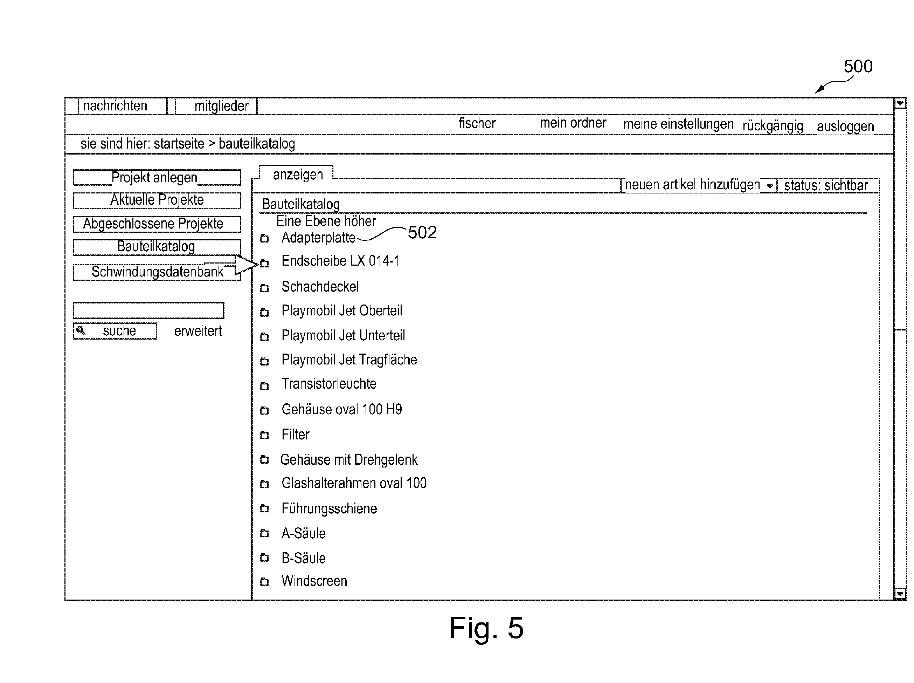

**Fig. 5** zeigt ein Computerfenster 500 betreffend einen Bauteilkatalog.

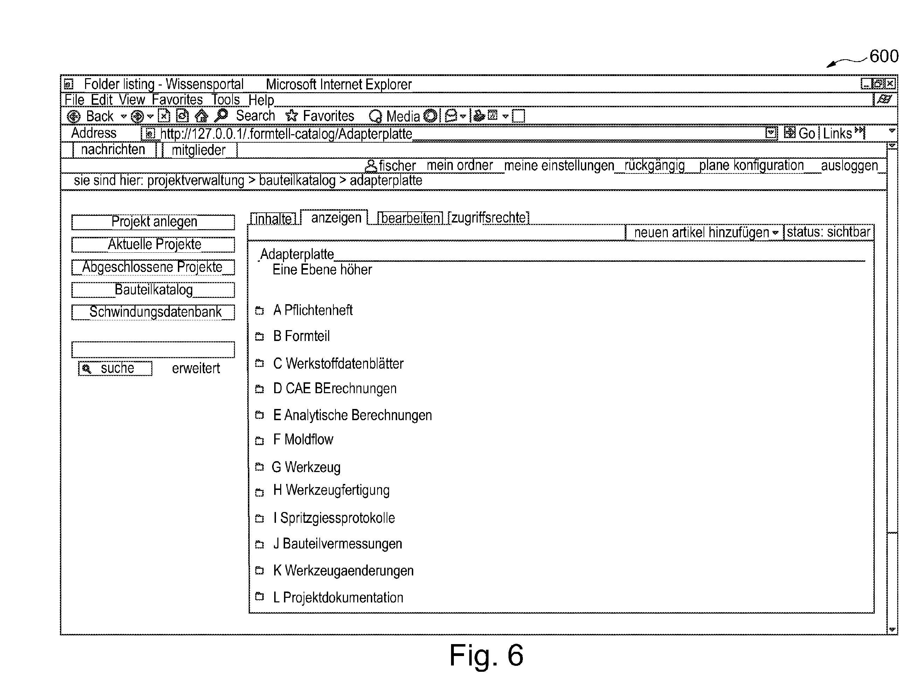

Wie das Computerfenster 500 zeigt, enthält der Bauteilkatalog jene Werkzeugprojekte, die in der Datenbank bzw. dem Massenspeicher 106 gespeichert sind. Klickt man in dem Computerfenster 500 auf das Icon Adapterplatte 502, so gelangt man zum Beispiel zu einem Computerfenster 600, das in **Fig. 6** gezeigt ist. Von Fig. 6 aus kann ein Benutzer dann weiter durch entsprechende Klicks zur Anzeige bestimmter Daten in der Datenbank gelangen. Fig. 5 und Fig. 6 zeigen, dass einzelne Informationen zu dem Bauteil "Adapterplatte" verlinkt sind, die durch Anklicken eines jeweiligen Links in dem Computerfenster 600 angesteuert werden können.

Unter "Bauteilkatalog" sind jene Werkzeugprojekte enthalten, die während der Programmentwicklung vom Entwicklerteam bearbeitet und dokumentiert wurden. Der Dokumentationsumfang dieser Projekte hängt von der Datenmenge ab, die von den Benutzern des Systems zur Verfügung gestellt wurde. Alle Projekte aus dem Bauteilkatalog haben gemeinsam, dass vom Entwicklerteam eine Moldflow-Berechnung und eine 3D-Bauteilvermessung durchgeführt wurden. Die Ergebnisse sind in dem Expertensystem gespeichert.

Gemäß Fig. 5 können alle verfügbaren Informationen der zugehörigen Bauteile aufgefunden werden. Die Unterverzeichnisse der Bauteile aus dem Bauteilkatalog (zum Beispiel Adapterplatte, Fig.6) haben die gleichen Bezeichnungen wie die Verzeichnisse, die beim Anlegen eines neuen Projektes angezeigt werden.

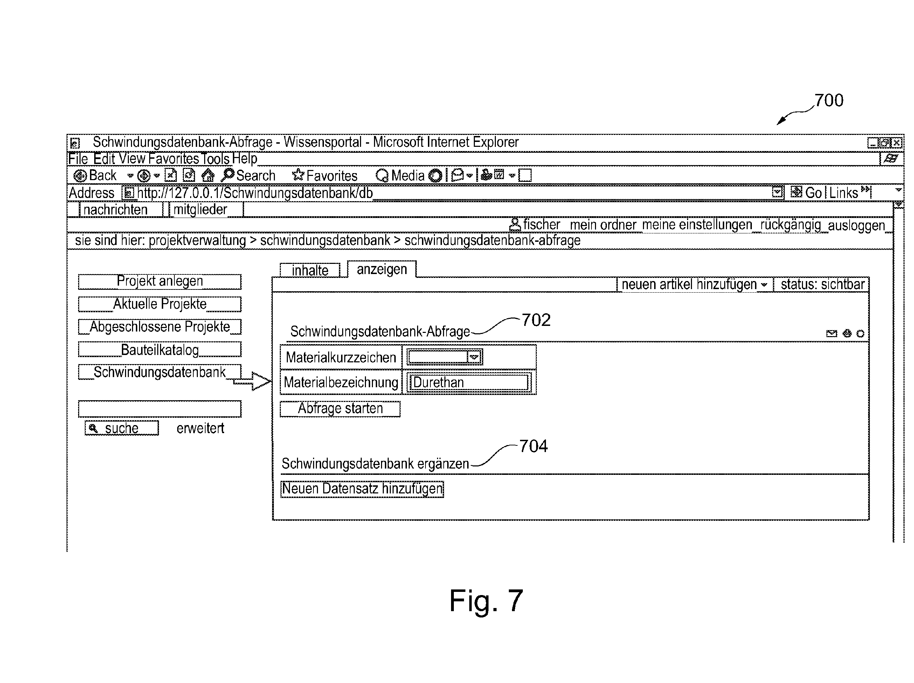

Bezugnehmend auf **Fig. 7** bis Fig. 16 werden im Weiteren Computerfenster eines computerimplementierten Systems zum Gestalten eines Formteils beschrieben, bei dem auf eine Schwindungsdatenbank zugegriffen werden kann. Mit einer solchen Schwindungsdatenbank, die laufend um weitere Daten ergänzt werden kann, kann ein Expertensysteme geschaffen werden, in dem experimentelle bzw. technische Erfahrungen bezüglich Schwindung und Verzug zusammengefasst sind. Die Schwindungsangaben sind auf konkrete Formteile und Prozessbedingungen bezogen.

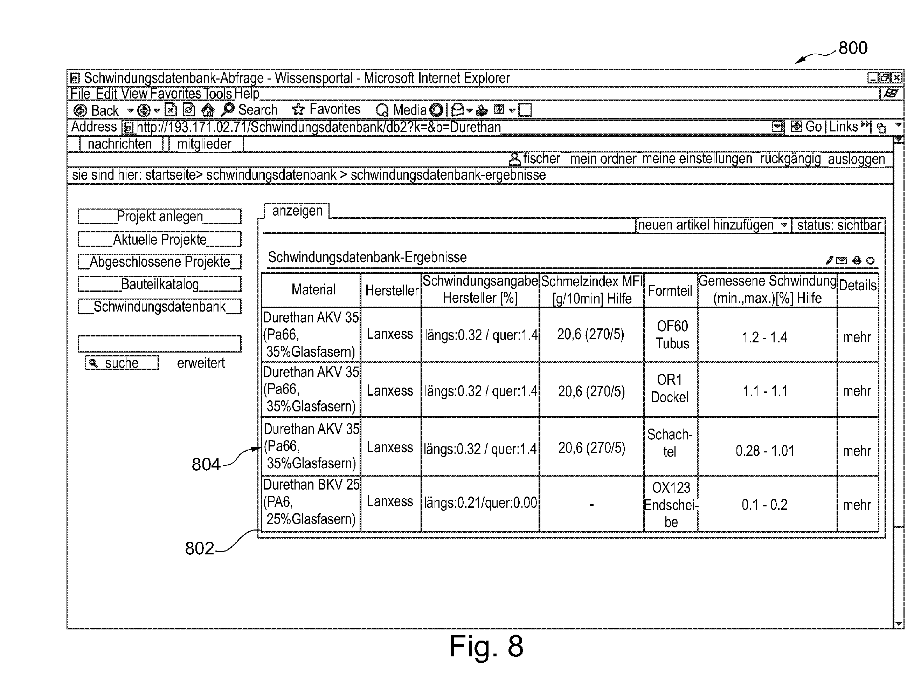

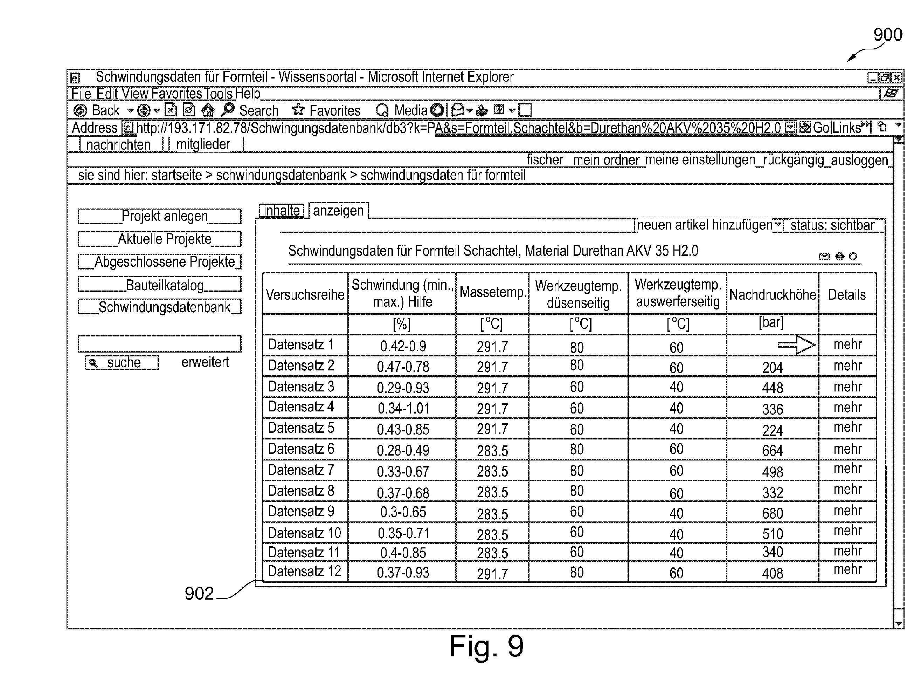

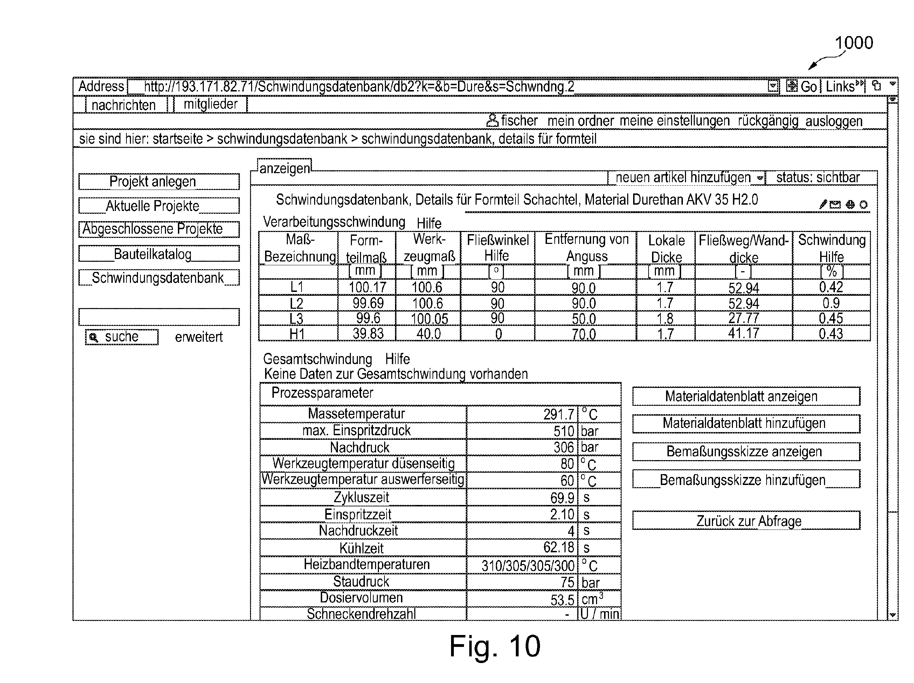

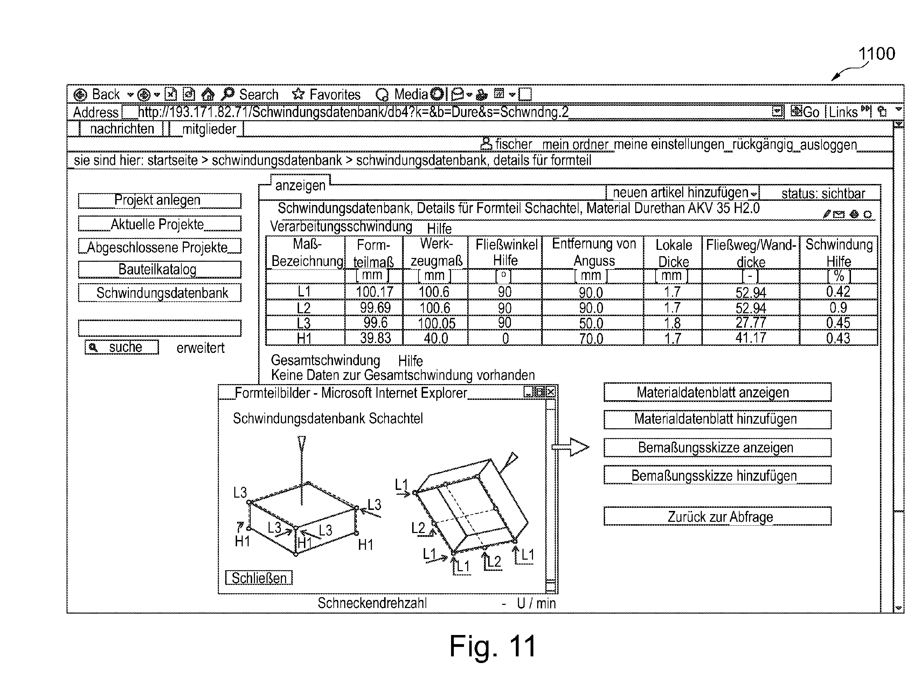

Wie ein Computerfenster 700 aus Fig. 7 zeigt, kann zwischen einer Schwindungsdatenbank-Abfrage 702 und einer Ergänzung der Schwindungsdatenbank 704 gewählt werden. Gemäß dem Computerfenster 700 ist unter dem Feld "Materialbezeichnung" das Material "Durethan" markiert. Ein Computerfenster 800 gemäß **Fig. 8** zeigt das zugehörige Suchergebnis, nämlich eine Tabelle 802, die für eine Mehrzahl von Durethan -Materialien unter anderem Schwindungsangaben darstellt. Zum Beispiel kann, vergleiche Zeile 804, für das dort gezeigte Schachtel-Formteil eine weitergehende Information angefordert werden, die einem Computerfenster 900 gemäß **Fig. 9** gezeigt ist. Hier ist eine Tabelle 902 gezeigt, in der einzelne Datensätze gemeinsam mit Schwindungsinformationen und weiteren Informationen gezeigt sind. **Fig. 10** zeigt ein Computerfenster 1000, das bezüglich des Formteils Schachtel angezeigt wird, wenn entsprechende Detailinformationen angefordert werden. **Fig. 11** zeigt einen Computerfenster 1100, bei dem für einen Formteil-Datensatz zu der gezeigten Schachtel eine bemaßte Skizze angezeigt ist.

In dem Expertensystem ist eine Schwindungsdatenbank vorhanden, die durch eigene Untersuchungen eines Benutzers ergänzt werden kann. Durch die Integration einer Schwindungsdatenbank in das Expertensystem stehen Erfahrungen für Schwindung und Verzug allgemein zur Verfügung und sind nicht auf wenige Personen beschränkt.

Die Schwindungsangaben in dem System sind auf konkrete Formteile und Prozessbedingungen bezogen, sodass praxisgerechte Angaben gefunden werden können. Im Gegensatz dazu machen Materialhersteller in ihren Datenblättern meist keine Angaben zum Spritzgießprozess und zur Probekörpergestalt.

In Fig. 7 kann ein Benutzer zwischen "Schwindungsdatenbank-Abfrage" und "Schwindungsdatenbank ergänzen" wählen.

Die Abfrage von Schwindungsdaten ist auf 2 Arten möglich.
1. Abfrage mittels Materialkurzzeichen: Dieses kann aus der Liste ausgewählt werden.
2. Suche mittels Materialbezeichnung, wenn diese bekannt ist. Ein Benutzer muss dazu nicht den ganzen Namen des Kunststoffes eingeben. Es reichen zwei oder drei Anfangsbuchstaben, um Suchtreffer zu erzielen.

Nach dem Drücken des Knopfes "Abfrage starten" wird der Benutzer auf eine Seite mit Suchtreffern weitergeleitet (Fig. 8). Die Seitenanzeige ist je nach Abfragestrategie anders. Durch Klicken gelangt der Benutzer auf die Seite "Schwindungsdatenbank-Ergebnisse", in der die Daten für das gesuchte Material angegeben werden. Sind für die Abfragespezifikation keine Schwindungsdaten gespeichert, wird dies ebenfalls durch eine entsprechende Meldung angezeigt.

Die Seite Schwindungsdatenbank-Ergebnisse (Fig. 8) ist immer in der gleichen Weise aufgebaut. Ein Benutzer findet die genaue Materialbezeichnung, den Hersteller, Schwindungsangaben des Herstellers, gemessene Schwindungsdaten und das Formteil, an dem die Schwindungsdaten ermittelt wurden. Diese Angaben verschaffen einen schnellen Überblick. Zum Formteil kann ein Benutzer sich Details anzeigen lassen, indem der Benutzer auf den Formteilnamen klickt. In gleicher Weise ist der Material-Name als Link ausgeführt, womit die Details zum verwendeten Material eingesehen werden können. Mehr Informationen zu den Versuchsreihen erhält der Benutzer durch Betätigung des Links "mehr".

Im dargestellten Fall von Fig. 9 sind zum Beispiel zwölf Datensätze mit unterschiedlichen Maschineneinstellungen gespeichert. Für jeden Datensatz sind die gemessenen Schwindungen in einer Bandbreite angegeben. Zusätzlich sind die wichtigsten Prozessgrößen angegeben.

Um noch detailliertere Schwindungsangaben für einen Datensatz zu erhalten, klickt der Benutzer auf den Link "mehr". Daraufhin werden die Verarbeitungsschwindung, die Gesamtschwindung (= Verarbeitungsschwindung + Nachschwindung) und die Prozessparameter sowie Maschinendaten angezeigt (Fig. 10). In den Tabellen Verarbeitungs- und Gesamtschwindung werden für die vermessenen Bauteillängen die Schwindungen angegeben. Zusätzlich werden der Fließwinkel, die Fließweglänge, die lokale Wanddicke und das Fließweglängen/Wanddickenverhältnis angezeigt, um einen Hinweis für die lokalen Maßverhältnisse zu erhalten. Es ist möglich, sich die Messstellen der einzelnen Schwindungsmaße anzeigen zu lassen. Durch einen Klick auf "Bemaßungsskizze anzeigen" wird ein Bild des zugehörigen Formteils geöffnet (Fig. 11). Des Weiteren kann ein Materialdatenblatt angezeigt werden, falls eines für den Datensatz gespeichert wurde. Für den Benutzer stehen zwei weitere Knöpfe zur Verfügung. Damit können Materialdatenblätter oder Bemaßungsskizzen hinzugefügt werden.

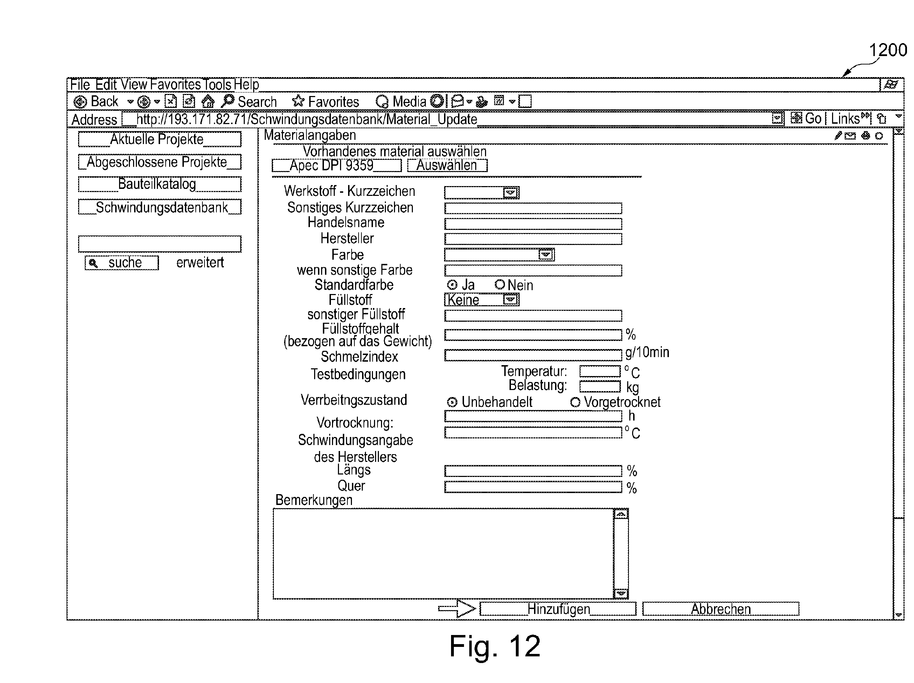

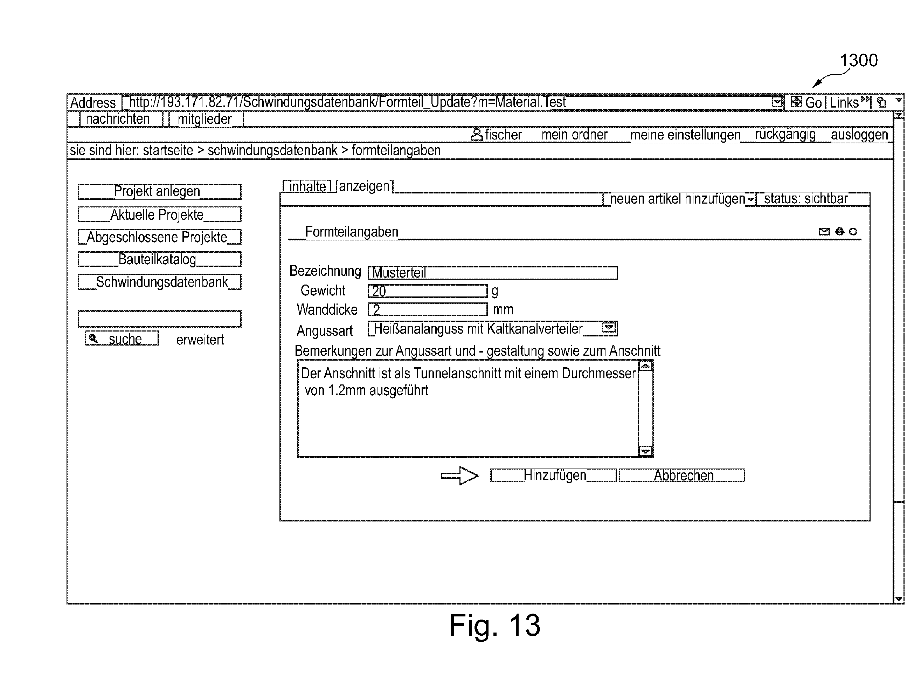

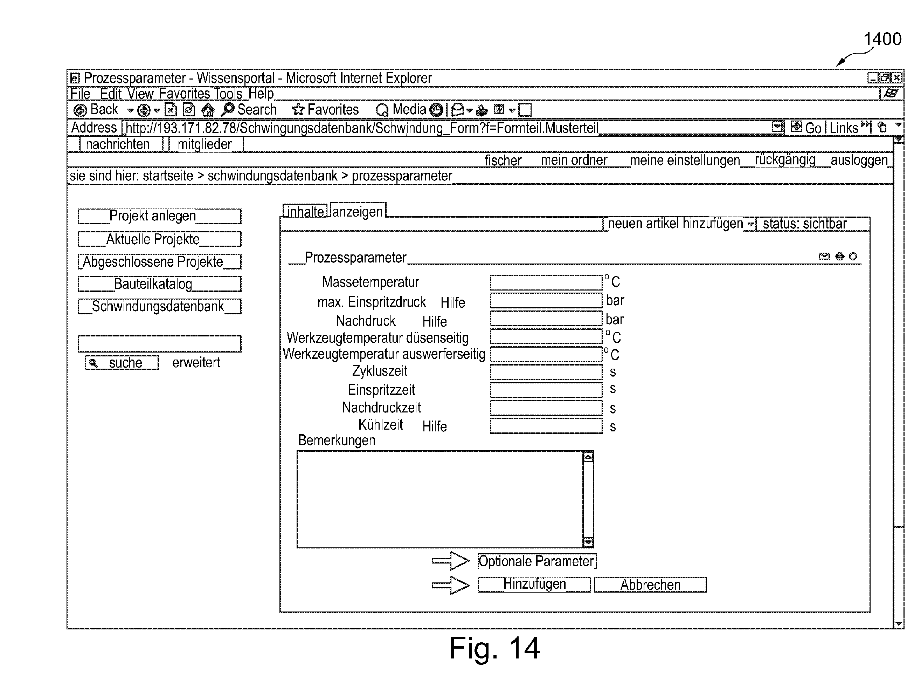

**Fig. 12** zeigt ein Computerfenster 1200, das in dem beschriebenen System angesteuert werden kann, um die Schwindungsdatenbank zu ergänzen. Hierfür kann ein Benutzer die einzelnen Felder in dem Computerfenster 1200 ansteuern und damit die Datenbank erweitern. Ein Computerfenster 1300, das der Eingabe von Formteil-Details dient, ist in **Fig. 13** gezeigt. Entsprechende Daten können im System somit hinzugefügt werden. Ein Computerfenster 1400 in **Fig. 14** erlaubt es, Prozessparameter für die Schwindungsdatenbank einzugeben.

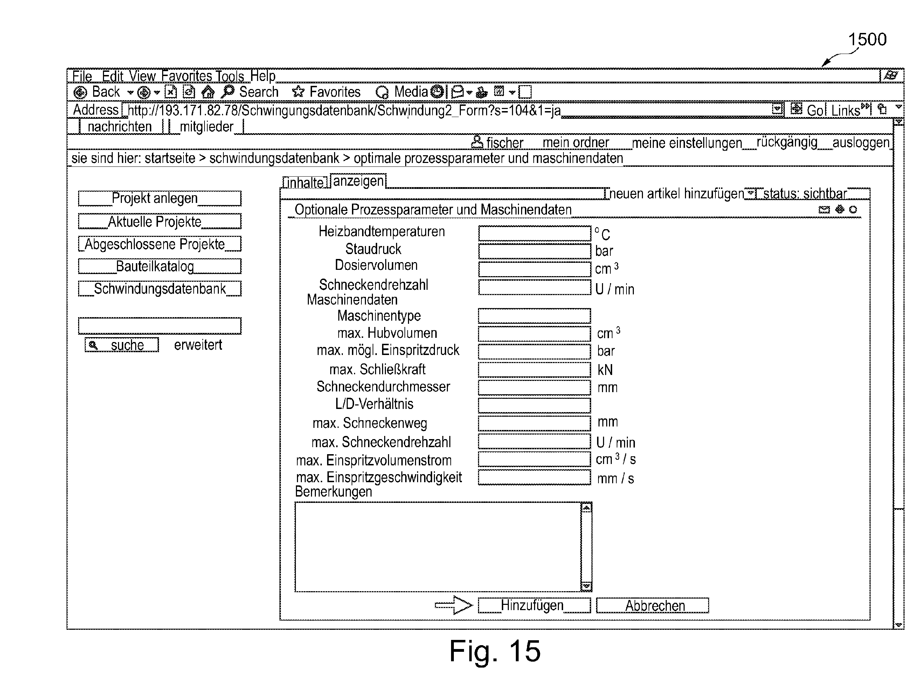

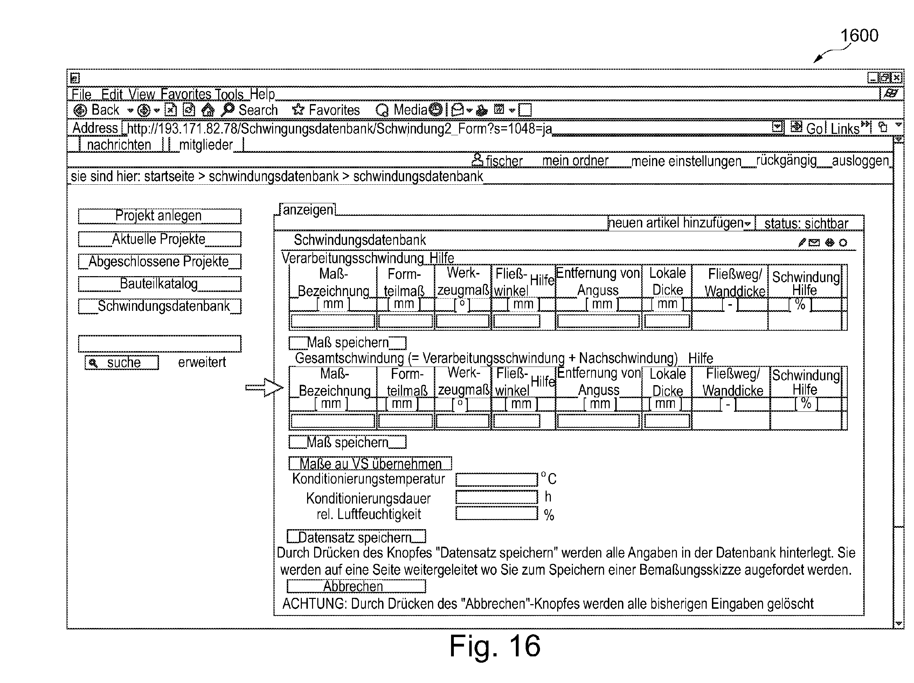

Optionale Prozessparameter sowie Maschinendaten können über ein Computerfenster 1500, gezeigt in **Fig. 15****,** eingegeben werden. Schließlich ist mittels eines Computerfenster 1600, gezeigt in **Fig. 16****,** eine Eingabe einer Schwindung möglich.

Für die Eingabe neuer Schwindungsdaten kann ein Benutzer wie folgt vorgehen: Klicken auf einer Hauptseite der Schwindungsdatenbank auf "Neuen Datensatz hinzufügen" (Icon 704 in Fig. 7). Zunächst wird der Benutzer zu einem Formular weitergeleitet, in welchem die Materialangaben gemacht werden (Fig. 12). Hier kann ein Benutzer ein bereits vorhandenes Material auswählen oder ein neues Material spezifizieren. Vorhandene Materialien können aus der Liste ausgewählt werden . Bei der Spezifikation der Materialfarbe kann ein Benutzer angeben, ob es sich um die Standardeinfärbung handelt.

Für neue Materialien kann ein Benutzer die leeren Felder ausfüllen, gegebenenfalls Bemerkungen eintragen und auf den Knopf "Hinzufügen" drücken. Durch Drücken des "Abbrechen" -Knopfes werden alle bisherigen Eingeben wieder gelöscht.

Nach Bestätigung der Eingaben wird der Benutzer auf ein neues Formular für die Formteilangaben weitergeleitet (Fig. 13). Für den Knopf "Abbrechen" gilt wieder das gleiche wie oben beschrieben. Durch Drücken des "Hinzufügen"-Knopfs kann der Benutzer zum Formular "Prozessparameter" gelangen (Fig. 14). In diesem Formular werden die wichtigsten Spritzgießparameter eingefügt, die für die Höhe der Schwindung von großer Bedeutung sind.

Hinter dem Knopf "Optionale Parameter" verbergen sich weitere Einstellgrößen und die technischen Daten der Spritzgießmaschine (Fig. 15). Zur Vollständigkeit der Dokumentation der Schwindungsdaten ist deren Eingabe sinnvoll.

Durch Drücken des "Hinzufügen" -Knopfes im Formular Prozessparameter (Fig. 14) bzw. im Formular "Optionale Prozessparameter und Maschinendaten" (Fig. 15) gelangt der Benutzer auf das eigentliche Formular für die Schwindungseingabe. Dieses Formular ist in die Bereiche "Verarbeitungsschwindung" und "Gesamtschwindung" unterteilt, vgl. Fig. 16.

Unter Verarbeitungsschwindung versteht der Fachmann nach DIN 16 901 den Unterschied zwischen den Maßen des Werkzeuges bei (23±2)°C und den Maßen des Kunststoff-Formteils, das nach seiner Herstellung 16 Stunden im Normalklima gelagert und unmittelbar danach gemessen wird.

Unter Gesamtschwindung ist die Schwindung nach längerer Lagerzeit in verschiedenen Konditionierungsbedingungen zu verstehen. Die Messung erfolgt nach der Abkühlung bei Normalbedingungen. Die Konditionierungsbedingungen sind nicht genormt.

Ein Benutzer gibt in die Felder des Formulars die Maß-Bezeichnung, das Formteilmaß, usw. ein. Durch den Knopf "Maß speichern" werden automatisch das Fließweg/Wanddicken-Verhältnis und die Schwindung berechnet sowie eine neue Zeile hinzugefügt (Fig. 16). Dieser Vorgang kann so oft wiederholt werden, bis alle Maße eingetragen sind. Sobald Schwindungsdaten abgespeichert werden, wird in jeder Zeile der Tabelle der Link "Ändern" angezeigt (Fig. 16). Damit können Fehler in den Eingeben korrigiert oder ganze Zeilen gelöscht werden.

Die Eingaben aus der Tabelle "Verarbeitungsschwindung" können mit dem Knopf "Maße aus VS übernehmen" in die Tabelle "Gesamtschwindung" übernommen werden, siehe Fig. 16. Ein Benutzer kann dann die Werte für die Formteilmaße eintragen.

Alle eingegebenen Daten werden durch das Drücken von "Datensatz speichern" in der Datenbank abgelegt. Gleichzeitig wird der Benutzer auf eine Seite weitergeleitet, wo der Benutzer zum Abspeichern von zusätzlichen Daten aufgefordert werden kann. Es handelt sich dabei um Bemaßungsskizzen als Bild- oder PDF-Datei, bzw. um Materialdatenblätter. Dieser Punkt kann auch übersprungen werden, wenn noch keine Daten zur Verfügung stehen.

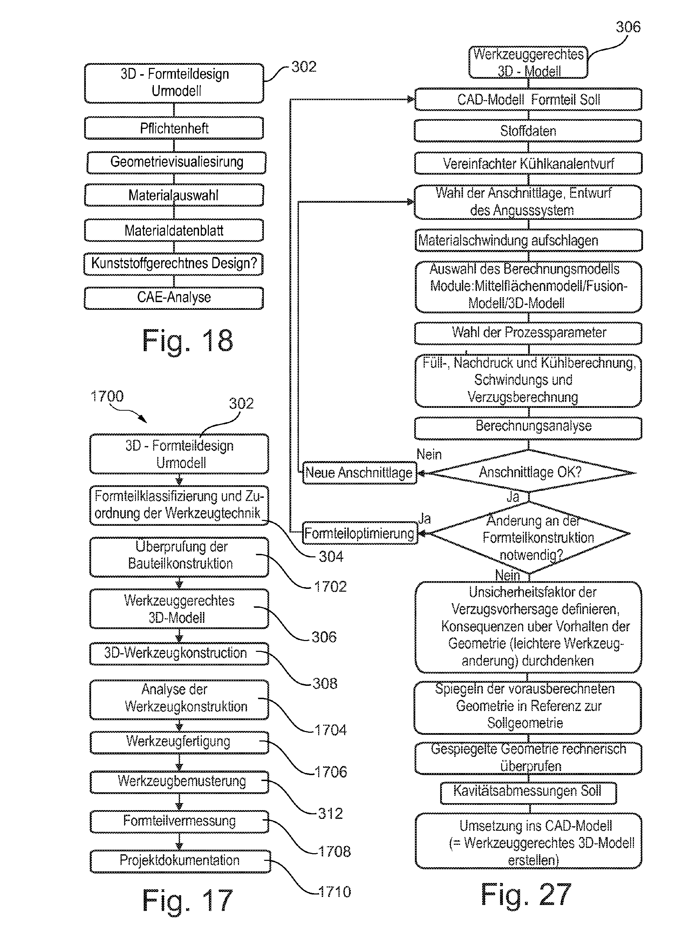

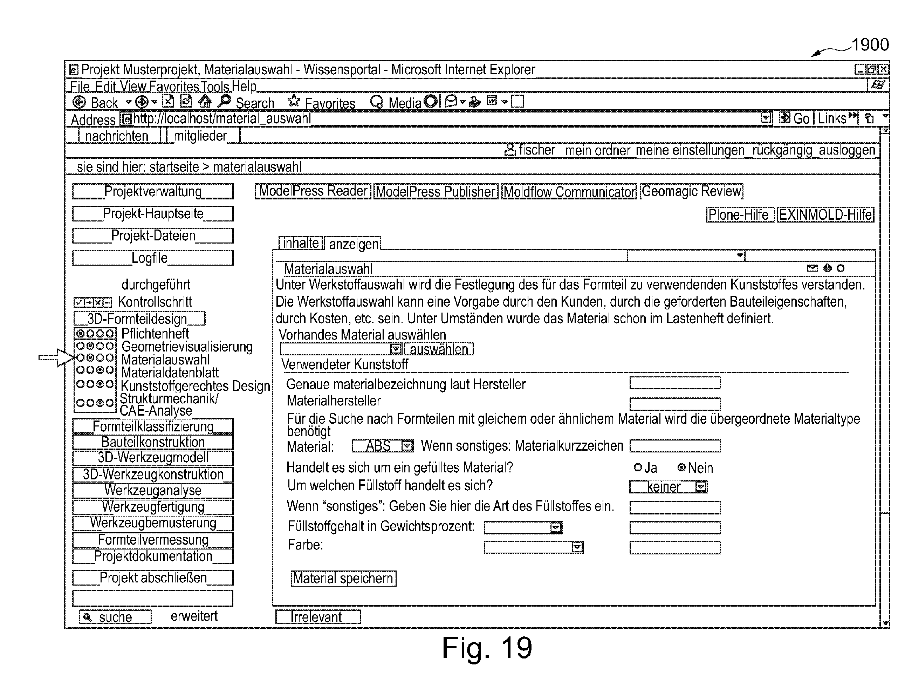

**Fig. 17** zeigt ein Flussdiagramm 1700, das jenem von Fig. 3 ähnelt, aber die weiteren Blöcke 1702 (Überprüfung der Bauteilkonstruktion), 1704 (Analyse der Werkzeugkonstruktion), 1706 (Werkzeugfertigung), 1708 (Formteilvermessung) und 1710 (Projektdokumentation) aufweist. Die einzelnen Blöcke des Flussdiagramms 1700 sind mit weiteren Details in **Fig. 18****,** **Fig. 21****,** **Fig. 25****,** **Fig. 27****,** **Fig. 29, Fig. 30****,** **Fig. 31, Fig. 32****,** **Fig. 36****,** **Fig. 40** gezeigt. In den sonstigen der Fig. 19 bis Fig. 40 finden sich entsprechende Computerfenster, die den einzelnen Blöcken in Fig. 17 entsprechen die im Weiteren näher beschrieben werden.

Fig. 17 stellt eine 3D-CAX-Prozesskette in einem Flussdiagramm 1700 dar. Dieses Flussdiagramm 1700 beinhaltet die Schritte, die für die Werkzeugkonstruktion und den Werkzeugbau von Bedeutung sind, vom Formteildesign bis zum qualitätsgeprüften Bauteil. Durch die Segmentierung in einzelne Module bzw. Bereiche wird der gesamte Prozess transparenter und erlaubt eine methodische Vorgehensweise während des Werkzeugkonstruktionsprozesses. Dabei wird eine sinnvolle Reihenfolge der Konstruktionsschritte eingeschlagen, welche jedoch nicht zwingend eingehalten werden muss.

Die Hauptmodule der 3D-CAX-Prozesskette sind:
- 3D-Formteildesign / Urmodell (Bezugszeichen 302)
- Formteilklassifizierung und Zuordnung der Werkzeugtechnik (Bezugszeichen 304)
- Überprüfung der Bauteilkonstruktion (Bezugszeichen 1702)
- Werkzeuggerechtes 3D-Modell (Bezugszeichen 306)
- 3D-Werkzeugkonstruktion (Bezugszeichen 308)
- Analyse der Werkzeugkonstruktion (Bezugszeichen 1704)
- Werkzeugfertigung (Bezugszeichen 1706)
- Werkzeugbemusterung (Bezugszeichen 312)
- Formteilvermessung (Bezugszeichen 1708)
- Projektdokumentation (Bezugszeichen 1710)

Das Modul "3D-Formteildesign" 302 ist in Fig. 18 näher dargestellt.

In diesem Modul werden Daten und Informationen für die Projektabwicklung gespeichert und allgemeine Fragen im Vorfeld der Werkzeugkonstruktion abgeklärt.

Im Unterpunkt "Pflichtenheft" wird ein Benutzer dazu aufgefordert, ein Kundenpflichtenheft zu speichern. Liegt das Pflichtenheft nicht in elektronischer Form vor, ist es entweder einzuscannen oder ein Leerformular auszufüllen. In dem Pflichtenheft sollten folgende Informationen enthalten sein:
1. Konstruktionsgesichtspunkte
   - Konstruktionsunterlagen
   - Formteilvolumen
   - Formteilgewicht
   - Formteilwerkstoff
2. Maschinendaten
   - Schließkraft
   - Plastifizierleistung
   - Maximales Schussvolumen
   - Werkzeugaufspannflächen
   - Holmabstände
3. Auftragsbezogene Kriterien
   - Losgröße
   - Terminplan
   - Fertigungstermine

Mittels eines firmeninternen CAD-Programms bzw. des in das Expertensystem integrierten STL-Viewers (ModelPress Reader) erfolgt die Visualisierung der Formteilkonstruktion. Dafür ist ein CAD-File des Formteils im firmeninternen Dateiformat oder als *.stl-File erforderlich. Anhand der Visualisierung erhält ein Benutzer einen ersten Eindruck über die Formteilgeometrie.

Die Materialauswahl (siehe Computerfenster 1900 in **Fig. 19**) kann eine Vorgabe durch den Kunden, durch die geforderten Bauteileigenschaften, durch Kosten, etc. sein. Im Unterpunkt Materialauswahl soll das verwendete Material spezifiziert werden. Bereits in der Datenbank vorhandene Materialien können aus dem Pull-Down-Fenster (Fig. 19) ausgewählt werden. Ist es nicht in der Liste enthalten, so ist das Formular für den verwendeten Kunststoff mit den entsprechenden Angaben auszufüllen.

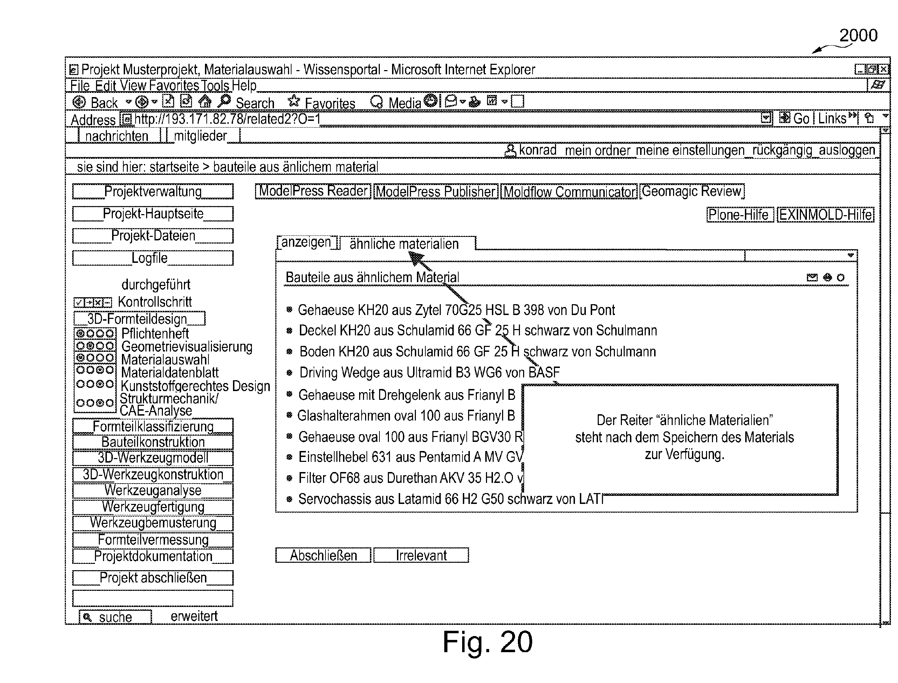

Alle Angaben der Materialauswahl werden für die Suche nach Bauteilen mit gleichem oder ähnlichem Material verwendet (siehe Computerfenster 2000 in **Fig. 20**)**.** Nach Drücken des Knopfes "Material speichern" wird ein Reiter mit der Bezeichnung "ähnliche Materialien" in der Bildschirmansicht eingefügt, der ab diesem Zeitpunkt zur Verfügung steht. Durch die Verwendung dieses Reiters kann ein Benutzer jederzeit Informationen zu Bauteilen mit gleichem oder ähnlichem Material finden, die in dem Expertensystem gespeichert sind.

Das entsprechende Materialdatenblatt des Rohstoffherstellers ist über den Unterpunkt "Materialdatenblatt" in das System zu speichern. Ist für das verwendete Material bereits ein Materialdatenblatt in der Datenbank vorhanden, wird dies in diesem Unterpunkt durch einen Link zum Materialdatenblatt angezeigt. In diesem Fall ist es nicht mehr notwendig, ein Datenblatt zu speichern.

Unter dem Checklistenunterpunkt "kunststoffgerechtes Design" sind die Abbildung des geforderten Formteileigenschaftsprofils (Gewicht, Maße, mechanische Eigenschaften, Oberfläche, etc.), die spritzgießtechnische Durchführbarkeit und die erlaubten Änderungen des Formteildesigns zu verstehen.

In dem Modul 3D-Formteildesign 302 ist ferner abzuklären, ob für das Formteil eine strukturmechanische Berechnung gemacht werden muss. Sollte das der Fall sein, müssen genauere Informationen für die Lastsituation, Randbedingungen, Umgebungsbedingungen, Designänderungsmöglichkeiten, etc. festgehalten werden. Die externen oder internen CAE-Analyseinformationen sind ebenfalls in dem System abzuspeichern. Dazu folgt ein Benutzer den Anweisungen auf dem Bildschirm für den Unterpunkt "Strukturmechanik / CAE-Analyse".

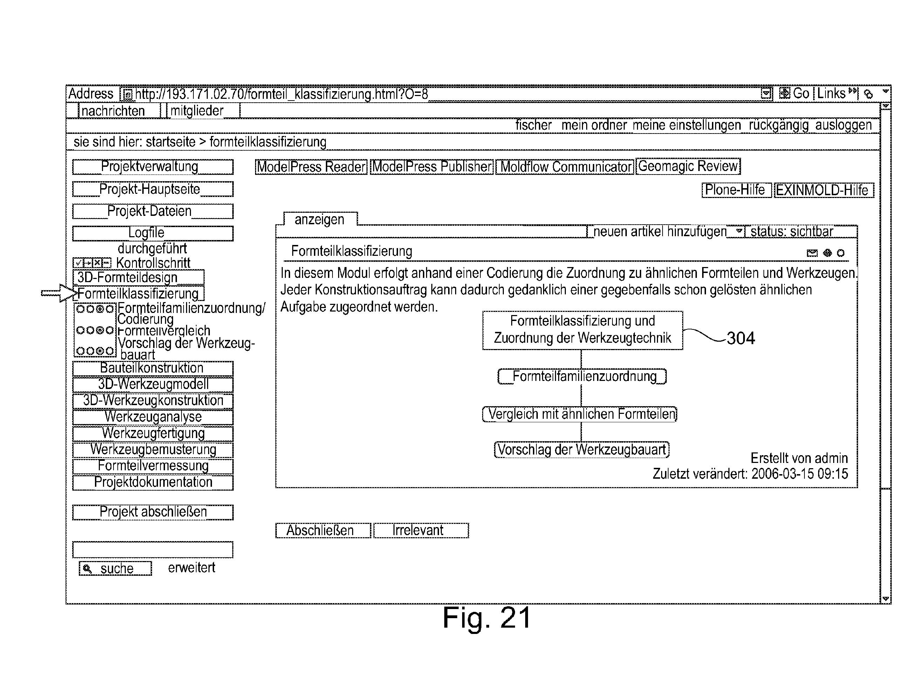

Das Modul "Formteilklassifizierung und Zuordnung der Werkzeugtechnik" 304 ist in Fig. 21 näher dargestellt.

Das Konstruktionssystem wird jeden neuen Konstruktionsauftrag gedanklich einer gegebenenfalls schon gelösten ähnlichen Aufgabe zuordnen. Bei einer großen Ähnlichkeit wird es die vormaligen Konstruktionsdaten heranziehen. Selbst bei geringer Ähnlichkeit können von dem System aber immer noch Teillösungen bzw. Teile der vorher gemachten Erfahrungen übernommen werden. Die Zuordnung zu ähnlichen Formteilen und Werkzeugen erfolgt im Programmmodul Formteilklassifizierung und Zuordnung der Werkzeugtechnik 304.

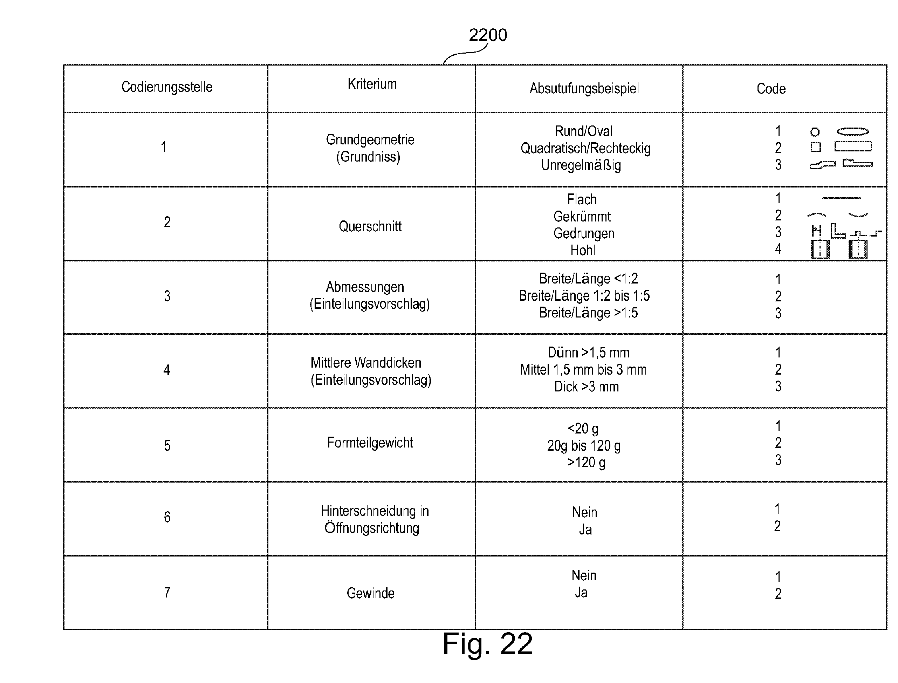

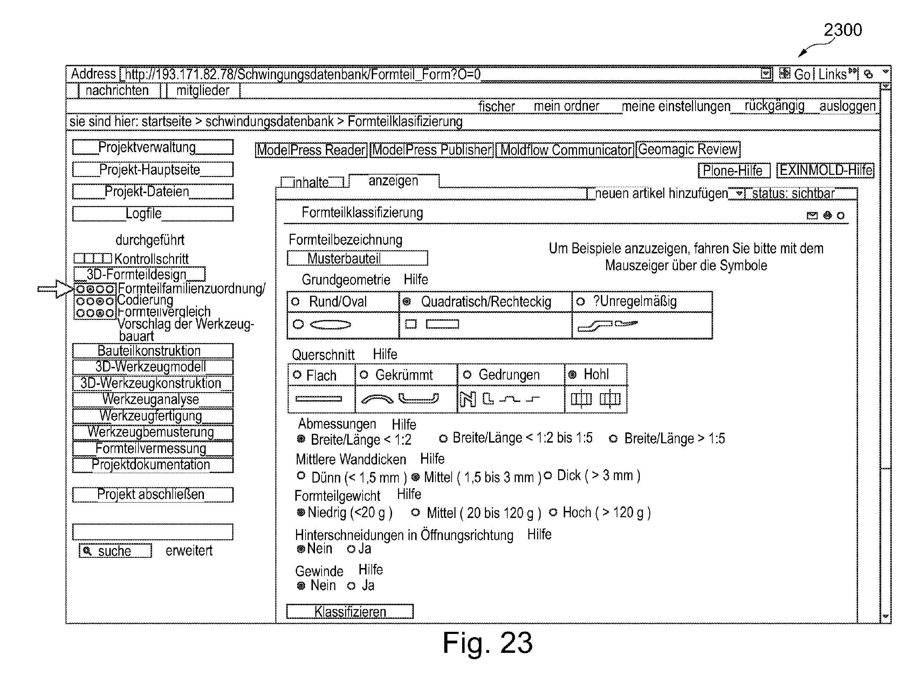

Die Zuordnung des Formteils zu einer Formteilfamilie erfolgt nach mehreren Kriterien (siehe Tabelle 2200 in **Fig. 22** und Computerfenster 2300 **Fig. 23**), die in weiterer Folge erläutert werden.

Eine Formteilfamilie besteht aus ähnlichen Formteilen, die bei Beachtung bestimmter Kriterien (Formnestzahl, Größe, Material, Anforderungen) mit konstruktiv ähnlichen Werkzeugen hergestellt werden können.

Auch geometrisch unterschiedliche Formteile können zum Teil mit konstruktiv ähnlichen Werkzeugen hergestellt werden. Die Zuordnung zu einer Formteilfamilie erfolgt über einen Codierungsschlüssel, indem bestimmten Formteilmerkmalen ein bestimmter Code zugeordnet wird (Fig. 22). Dieser Code besteht aus 7 Stellen. Die erste Stelle des Codes ist die Grundgeometrie, usw.

Ein Benutzer wird dazu aufgefordert, die geometrischen Merkmale per Mausklick auszuwählen (Fig. 23). Die Einordnung in eine Formteilfamilie wird vom System automatisch durchgeführt. Anhand dieser Zuordnung werden aus dem in dem System enthaltenen Formteilkatalog ähnliche Bauteile ausgesucht, die in weiterer Folge bei der Bearbeitung des Projektes als Erfahrungsschatz zur Verfügung stehen.

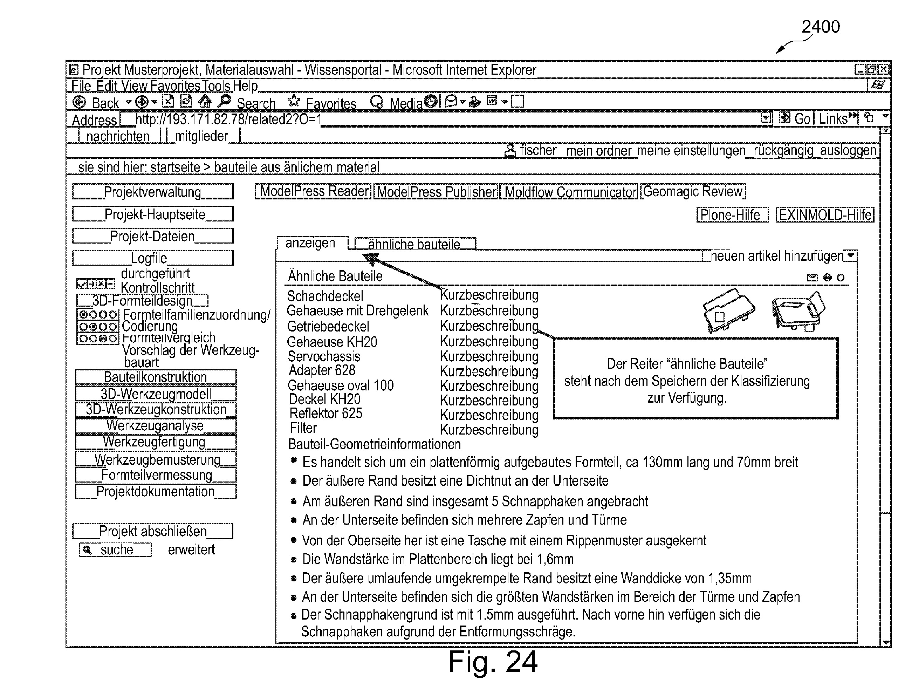

Nach Drücken des Knopfes "Klassifizieren", vgl. Fig. 23, wird ein Reiter mit der Bezeichnung "ähnliche Bauteile" in einer Bildschirmansicht 2400 gemäß **Fig. 24** eingefügt und ab diesem Zeitpunkt immer angezeigt. Nach diesem Schritt können die ähnlichen Formteile vom Werkzeugkonstrukteur begutachtet werden. Informationen und Erfahrungen der bisherigen Konstruktionen können für die Konstruktion des neuen Werkzeugs herangezogen werden.

Das Programmsystem kann auf Basis der Formteilcodierung automatisiert die Werkzeugbauart vorschlagen. Die richtige Zuordnung wird anhand der Formteile im Formteilkatalog durchgeführt.

Trotz der Ergebnisse aus der Codierung kann noch aus wirtschaftlichen oder technischen Gründen eine Diskrepanz zu dem Anforderungsprofil des neuen Werkzeuges vorliegen. Wird dies von dem Konstruktionssystem erkannt, besteht die Möglichkeit, die Werkzeugbauart zu ändern und auf andere ähnliche Werkzeuge zurückzugreifen.

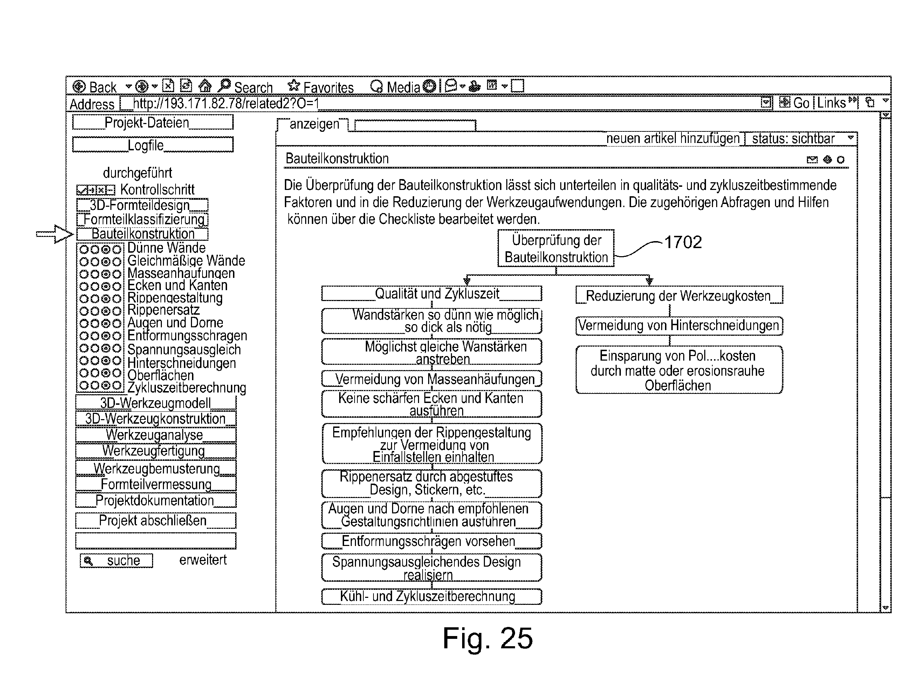

Das Modul "Überprüfung der Bauteilkonstruktion" 1702 ist in Fig. 25 näher dargestellt.

Die Bauteilkonstruktion ist für die Qualität des produzierten Spritzgießbauteils von wesentlicher Bedeutung. Fehler im Design des Bauteils lassen sich durch eine konsequente Begutachtung der Konstruktion hinsichtlich spritzgießrelevanter Kriterien bereits frühzeitig vermeiden.

Die Überprüfung der Bauteilkonstruktion lässt sich in qualitäts- und zykluszeitbestimmende Faktoren und in die Reduzierung der Werkzeugaufwendungen unterteilen. Die Unterteilung der Kriterien mit den zugehörigen Checklistenpunkten ist Fig. 25 zu entnehmen.

In diesem Modul werden die Anforderungen an Schwindung und Verzug sowie die richtige Lage der Werkzeugtrennebene noch nicht behandelt. Im Vordergrund stehen die Fragestellungen der möglichst einheitlichen Wanddicke, die Vermeidung von Masseanhäufungen, scharfen Kanten, der Rippengestaltung, Ausführung von Schraubenaugen und Schraubdomen, etc. sowie einer ersten Kühl- und Zykluszeitberechnung.

Zur Überprüfung der Reduzierung der Werkzeugkosten können die ersten Überlegungen hinsichtlich der Lage der Werkzeugtrennebene, der Vermeidung von Hinterschneidungen und den Aufwendungen der Formteiloberflächenausführungen angestellt werden.

In dem Modul "Überprüfung der Bauteilkonstruktion" 1702 ist ein Berechnungsprogramm für die Kühl- und Zykluszeit vorhanden. Die

Vorgangsweise und alle wichtigen Ein- und Ausgaben werden im Folgenden beschrieben.

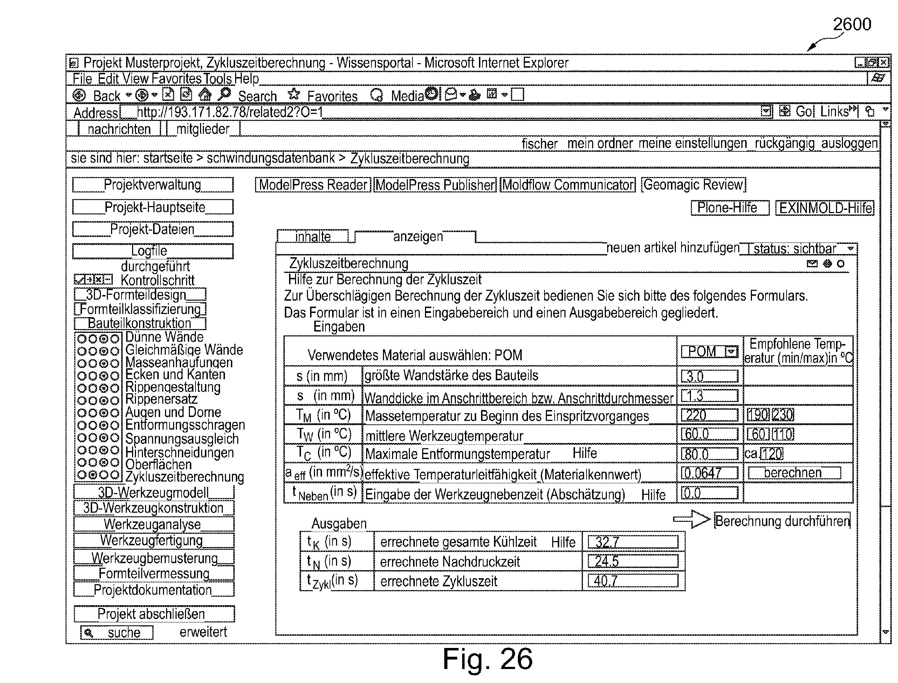

Nachdem der Unterpunkt "Zykluszeitberechnung" ausgewählt wurde, wird am Bildschirm ein Formular für die Berechnungseingaben und -ausgaben angezeigt (siehe Computerfenster 2600 in **Fig. 26**). Um die Anwendung der Zykluszeitberechnung zu erklären, werden Hilfen zur gesamten Berechnung sowie zu einzelnen Eingeben am Bildschirm angeboten. Hierzu kann ein Benutzer auf einen "Hilfe"-Link klicken, um den Hilfetext angezeigt zu bekommen.

Die Vorgangsweise zur Berechnung der Zykluszeit gestaltet sich wie folgt:
1. Ein Benutzer wählt aus dem Pull-down-Feld das verwendete Material aus. In der Datenbank sind für mehrere Materialklassen Empfehlungen sowie physikalisch notwendige Daten für die Berechnung gespeichert. Sollte das verwendete Material nicht in der Liste enthalten sein, kann es ein Benutzer dem Materialdatenblatt des Herstellers die entsprechenden Eingabewerte entnehmen. Das verwendete Material wird automatisch ausgewählt, sofern im Modul "3D-Formteildesign" 302 die Materialauswahl durchgeführt wurde. Voraussetzung dafür ist, dass das Material bereits in der Datenbank enthalten ist.
2. Als weitere Eingaben sind die größte Wanddicke des Formteils (kühlzeitbestimmend) und die Dimensionen im Anschnittbereich (nachdruckzeitbestimmend) erforderlich.
3. Des Weiteren müssen die Massetemperatur, Werkzeugwandtemperatur und Entformungstemperatur eingegeben werden. Diese sind im Vorhinein nicht bekannt und müssen möglichst prozessnah geschätzt werden. Ein Benutzer kann sich dabei an den empfohlenen Temperaturen am Bildschirm orientieren. Diese Eingaben beeinflussen die Berechnungsergebnisse erheblich.
4. Als nächstes muss die effektive Temperaturleitfähigkeit durch Drücken eines Knopfes "Berechnen" aus der Datenbank ermittelt werden. Bei einem neuen nicht in der Liste angeführten Material muss der Wert für die Temperaturleitfähigkeit separat eingetragen werden.
5. Um die Zykluszeit berechnen zu können, ist die Eingabe der Werkzeugnebenzeiten (Werkzeug öffnen, entformen, schließen) erforderlich.
6. Durch Drücken auf den Knopf "Berechnung durchführen" wird die Berechnung ausgeführt und werden die Ergebnisse im Ausgabe-Feld angezeigt. Die Ausgabe zeigt die errechnete Kühl-, Nachdruck- und Zykluszeit.

Es sei angemerkt, dass es sich bei diesen berechneten Werten um physikalisch mögliche Werte handelt, die auf bestimmten Annahmen beruhen (plattenförmiges Bauteil, ideale Wärmeabfuhr aus beiden Seiten, homogene Werkzeugwandtemperatur, usw.) und daher Abweichungen zu den tatsächlich erreichbaren Werten auftreten können.

Das Modul "Werkzeuggerechtes 3D-Modell" 306 ist in Fig. 27 näher dargestellt.

Im Modul "Werkzeuggerechtes 3D-Modell" 306 gilt es, die Formteilschwindung so gut wie möglich einzuarbeiten.

Im Folgenden werden mögliche Wege von dem Formteil-CAD-Modell bis hin zum werkzeuggerechten 3-D Modell mit berücksichtigter Schwindung aufgezeigt.

Auf der einen Seite sind Schwindung und Verzug mit entsprechenden Berechnungsprogrammen wie Moldflow Plastics Insight® (MPI) zu berechnen, auf der anderen Seite aber auch die bisherigen Erfahrungen aus den bereits abgewickelten Projekten heranzuziehen.

Werden für das aktuelle Projekt keine Simulationsberechnungen durchgeführt, so können im Rahmen der Projektbearbeitung die meisten Punkte in diesem Modul mit "nicht relevant" gekennzeichnet werden. Hierfür benutzt ein Benutzer einen Knopf "Simulationsrelevante Unterpunkte überspringen". Ausgangsbasis für jegliche Spritzgießsimulation ist das Vorhandensein korrekter Stoffdaten. Für die Simulation sind die rheologischen und thermodynamischen Stoffdaten des Kunststoffes erforderlich. Ist das verwendete Material nicht in der Datenbank des Simulationsprogramms vorhanden, muss entschieden werden, ob Berechnungen mit einem ähnlichen Ersatzmaterial durchgeführt werden können, oder ob die Ermittlung der erforderlichen Stoffdaten in Auftrag gegeben werden muss. Hilfen zur Auswahl von Ersatzmaterialien werden in diesem Arbeitsschritt angeboten.

Da in diesem Stadium der Werkzeugauslegung noch keine Werkzeugkonstruktion vorliegt, die Berechnungen jedoch nach Möglichkeit mit integrierter Kühlung durchgeführt werden müssen, ist zumindest näherungsweise ein erstes Layout der Kühlkanäle notwendig.

Gegebenenfalls reicht bei Mehrfachwerkzeugen ein vereinfachter Kühlkanalentwurf für ein Formnest aus. In der Regel wird die Gleichmäßigkeit der Formteilkühlung durch den Platzmangel bzw. die machbare Unterbringung des Kühlsystems bestimmt. Anregungen für die Platzierung der Kühlkanäle können aus dem Formteilkatalog gewonnen werden.

In diesem Stadium der Werkzeugkonstruktion ist die genaue Festlegung der Werkzeugtrennebene unabdingbar. Anschnittlage und Werkzeugtrennebene stehen in einem gewissen Zusammenhang. Gegebenenfalls ist die bevorzugte Anschnittlage bereits im Pflichtenheft gekennzeichnet oder der Konstrukteur schlägt die Anschnittlage aufgrund seiner Erfahrungen vor. Zusätzlich gibt es die Möglichkeit, eine Empfehlung für die Anschnittlage mit dem in MPI integrierten Programmmodul "Gate Location" zu ermitteln. Genauere Festlegungen zur Angussart und Anschnittlage können unter Umständen bei der Projektvorbereitungsphase im Pflichtenheft erfolgt sein.

In der Regel wird der Anschnitt so gewählt, dass das Formteil nach Möglichkeit in alle Richtungen gleichmäßig gefüllt wird und Lufteinschlüsse vermieden werden. Ort und Angussausführung bestimmen aber Schwindung und Verzug mit. Die Konsequenzen lassen sich in der Regel erst durch unterschiedliche Anschnittpunkte näher bestimmen.

Simulationserfahrungen haben gezeigt, dass je nach zu verwendendem Material (amorph oder teilkristallin) die zu erwartenden Vorausberechnungen für Schwindung und Verzug unterschiedlich gut sein können. Für die rechentechnische Bestimmung der Soll-3D-Werkzeuggeometrie sind die Erfahrungen mit den verschiedenen Programmmodulen (Midplane, Fusion, 3D) aus dem Projekt einzubeziehen. Gleiches gilt für die unterschiedliche Genauigkeit des Berechnungsprogramms bei Verwendung von amorphen und teilkristallinen bzw. verstärkten Polymeren.

Anhaltspunkte für die richtige Annahme von Schwindungsgrößen sind aus der Schwindungsdatenbank und dem Formteilkatalog für gleiche Materialien zu entnehmen.

Bei der eingesetzten Datenbank sind neben den Schwindungsdaten auch die Formteilgeometrie und die Verfahrensdaten angegeben. Für die Eingabe von neuen Schwindungsdaten durch einen Benutzer wird eine Eingabemaske zur Verfügung gestellt. Über einen längeren Zeitraum kann so eine Schwindungsdatenbank mit einer Vielzahl von Schwindungswerten an unterschiedlichen Formteilgeometrien entstehen.

Diese Schwindungsdatenbank bietet insbesondere Vorteile, wenn geometrisch ähnliche Formteile aus ähnlichem oder gleichem Material produziert werden sollen. In diesem Fall werden sich vermutlich auch die Prozessgrößen bei der Herstellung des Formteils nicht wesentlich unterscheiden. Die Übertragbarkeit von Schwindungswerten ist jedoch eingeschränkt bei völligen Neukonstruktionen oder bei einem Material, für das noch keine Schwindungswerte existieren.

Für die Simulationsrechnung werden die Verarbeitungsparameter in Hinblick auf Temperatur, Druck und maximaler Einspritzgeschwindigkeit benötigt. Diese sind entweder aus den Richtlinien der Rohstoffhersteller oder aus den Erfahrungen des Formteilkatalogs zu entnehmen. Für die ersten Berechnungen von Schwindung und Verzug empfiehlt sich mit einem einheitlichen Schwindungsfaktor für das gesamte Bauteil zu rechnen. Schwindungsfaktoren zeigen neben ihrer Materialabhängigkeit auch eine Prozess- und Geometrieabhängigkeit.

Die Interpretation der Berechnungsergebnisse setzt einige Erfahrung mit der Simulationssoftware voraus und umfasst die Analyse aller Berechnungsmodule. Im Bereich der Füllberechnung liegt das Hauptaugenmerk am Füllbild. Bindenähte, Lufteinschlüsse, Fließ- und Faserorientierungen sind weitere Ergebnisse, die aus der Füllphase resultieren.

Ein Ziel kann sein, über die Wahl der richtigen Anschnittlage ein möglichst ausgeglichenes Füllbild zu erreichen. Das heißt, dass bei manchen Formteilen eine Füllung von einer Seite her bevorzugt werden sollte, bei anderen Formteilen mit zentralem Anschnitt hat die Ausgeglichenheit (Fließfront erreicht den Formteilrand überall möglichst zur gleichen Zeit) des Füllbildes Priorität.

Die Nachdruckberechnung liefert Hinweise über die Nachdruckwirksamkeit im Formteil sowie die erforderliche Nachdruckzeit, um den Siegelpunkt zu erreichen.

Unter der Voraussetzung der Gültigkeit eines vereinfachten Kühlkanalsystems kann aus den Berechnungen die Effektivität der Kühlung (Gleichmäßigkeit der Temperierung/Kühlung, Auftreten von Hotspots, usw.) ermittelt werden. Aus der Analyse der Kühl-, Füll- und Nachdruckergebnisse können Schwachstellen in der Formteilausführung bzw. des gewählten Anschnittsystems erkannt werden. Diese Mängel sind vor der Werkzeugkonstruktion zu beseitigen.

In der Regel zeigt sich, dass sich durch eine ausgeglichene Füllphase geringere Unzulänglichkeiten von Schwindung und Verzug ergeben. Zur Abschätzung der Genauigkeit der Schwindungs- und Verzugsergebnisse können die umfangreichen Schwindungslisten und Erfahrungen aus dem Expertensystem herangezogen werden.

Sollten sich zwischen der Berechnung und den Erfahrungswerten größere Unterschiede ergeben, sind Unsicherheitsfaktoren einzuführen, die eine Werkzeugnacharbeit zulassen, ohne gesamte Werkzeugbereiche neu zu fertigen. Dies ist insbesondere bei der Verarbeitung von ungefüllten teilkristallinen Materialien empfehlenswert.

Die Schwindungs- und Verzugsberechnung liefert die Deformationen des Formteils. Um die Werkzeuggeometrie für ein im Wesentlichen schwindungs- und verzugsfreies Formteil zu erhalten, muss dem Verzug entsprechend gegengehalten werden. Dies kann in MPI durch Spiegeln der vorausberechneten Geometrie in Referenz zur - für die Berechnung eingesetzten Sollgeometrie - erfolgen. Nach der Durchführung der Spiegelung wird ein weiterer Berechnungsgang zur Überprüfung empfohlen.

Die gespiegelte vorausberechnete Geometrie mit partiell vorgehaltenen Maßen muss nun noch vom Konstrukteur in ein CAD-File übergeführt werden, damit die 3D-Werkzeugkonstruktion auf den ermittelten "Werkzeugabmessungen Sol" basiert.

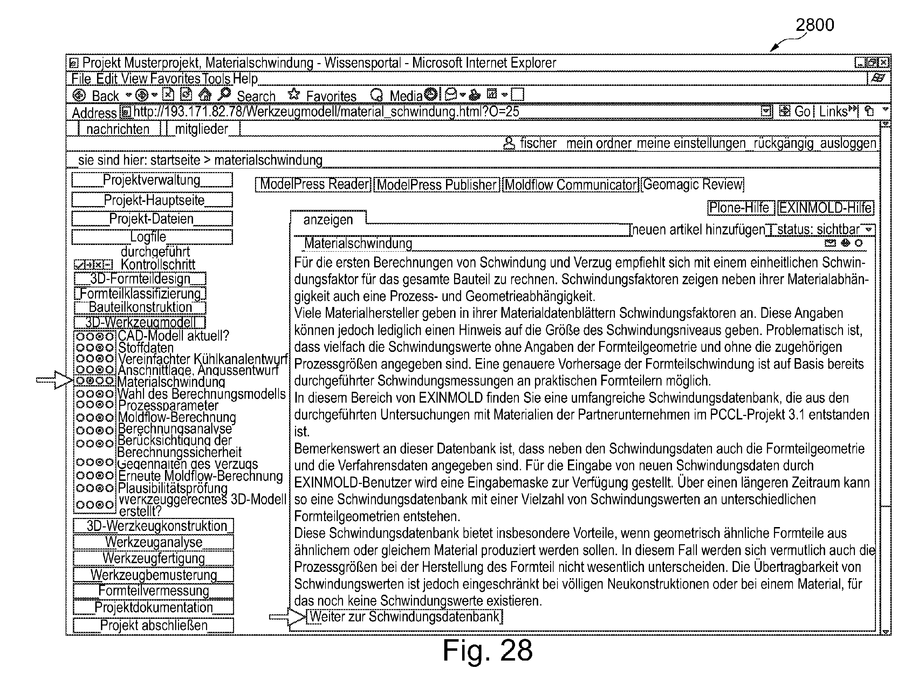

Computerfenster 2800 aus **Fig. 28** zeigt einen Checklistenunterpunkt Materialschwindung mit einem Link zu der Schwindungsdatenbank.

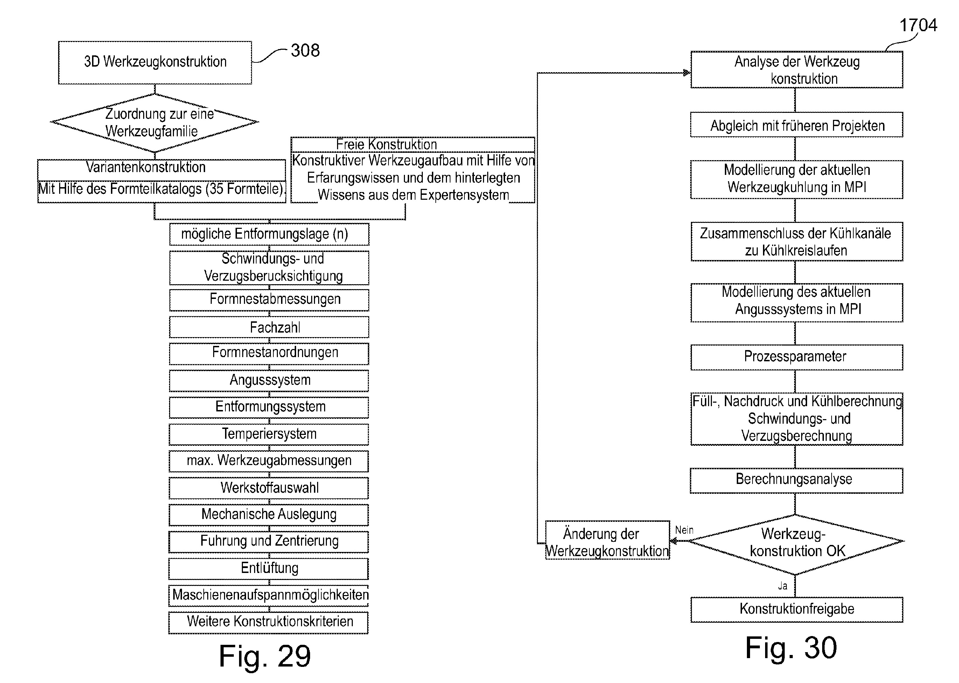

Das Modul "3D-Werkzeugkonstruktion" 308 ist in Fig. 29 näher dargestellt.

Dieser Bereich des Systems wird parallel zu dem CAD-Programm verwendet, in dem die Werkzeugkonstruktion durchgeführt wird. Vorwiegend wird dieses Modul als Informationswerkzeug genutzt, das umfangreiches Literatur- und Expertenwissen zum Thema Werkzeug zur Verfügung stellt. Die Konstruktionsschritte sind in einer sinnvollen Reihenfolge angeordnet, die dem Flussdiagramm in Fig. 29 zu entnehmen ist.

Die Vorteile dieser Systematik sind:
- kontrollierte Konstruktionsvorgänge
- sinnvolle Konstruktionsabfolge
- Schaffung von Entscheidungshilfen durch die integrierte Dokumentation
- gezielte Anwendung von Simulationsrechnungen
- Produktion von Konstruktionsqualität
- Reduzierung der Konstruktionszeit
- Hilfestellung für unerfahrenere Benutzer bei der Konstruktion von schwierigen Werkzeugkonstruktionen

In Ergänzung zu den Informationen können in diesem Bereich mehrere Berechnungsmodule integriert, die zum Beispiel zur Ermittlung der Fachzahl dienen oder den Konstrukteur bei der mechanischen Auslegung des Werkzeugs unterstützen.

Das Modul "Analyse der Werkzeugkonstruktion" 1704 ist in Fig. 30 näher dargestellt.

In diesem Modul 1704 erfolgt die "virtuelle Analyse" des Werkzeugs bzw. der Werkzeugkonstruktion. Erste Vergleiche können mit früher durchgeführten Projekten erfolgen, die nach Projektabschluss in den Formteilkatalog übernommen wurden. Des Weiteren stützt sich dieses Modul 1704 stark auf die Simulation. Wird keine Simulation durchgeführt, kann ein Knopf "Simulationsrelevante Unterpunkte überspringen" gedrückt werden, um berechnungsrelevante Unterpunkte auf irrelevant zu setzen.

Für die Überprüfung mittels Simulation muss das Berechnungsmodell aus dem Modul "Werkzeuggerechtes 3D-Modell" 306 in weiterer Folge der aktuellen Werkzeugkonstruktion angepasst werden. Die Werkzeugkühlung und das Angussystem werden im Berechnungsmodell integriert und bei Bedarf auf Mehrfachkavitäten erweitert.

Für die nachfolgende Berechnung werden die bereits vorhandenen Prozessparameter aus dem Modul "Werkzeuggerechtes 3D-Modell" 306 übernommen.

Die Überprüfung der Qualitätsanforderungen an das Formteil werden in ähnlicher Weise wie beim Einsatz des Moduls "Werkzeuggerechtes 3D-Modell" 306 durchgeführt. Bei Bedarf kann eine Rekursion erfolgen und Änderungen in der Werkzeugkonstruktion vorgenommen werden.

Dieser virtuelle Kreislauf wird solange durchgeführt, bis keine Änderungen an der Werkzeugkonstruktion mehr notwendig sind. Abschließend erfolgt die Freigabe der Werkzeugkonstruktion und es können alle Konstruktionsunterlagen erstellt und an die Arbeitsvorbereitung bzw. den Werkzeugbauer übergeben werden.

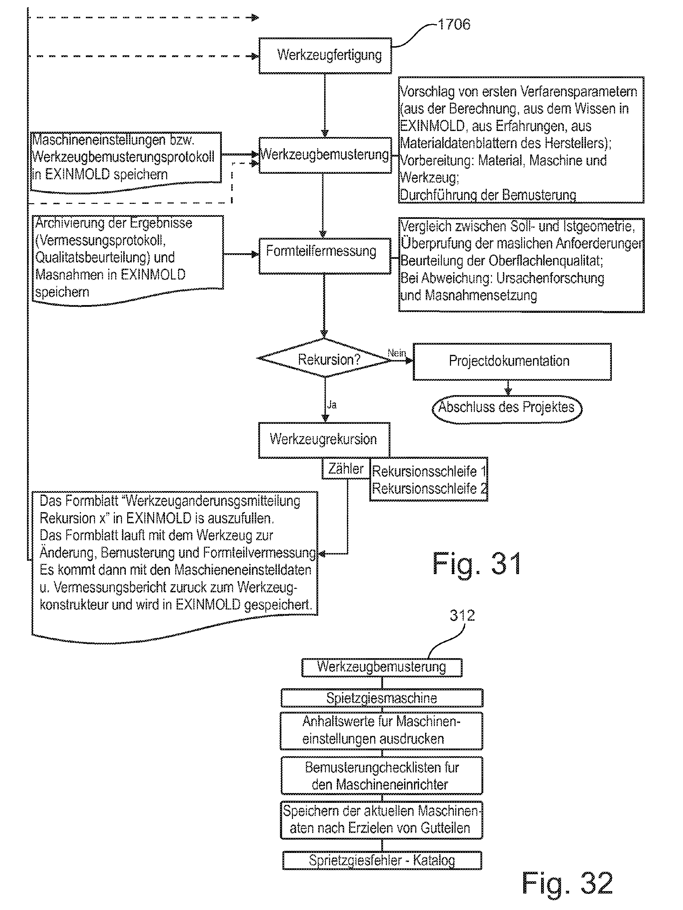

Das Modul "Werkzeugfertigung" 1706 ist in Fig. 31 näher dargestellt.

Das Flussdiagramm in Fig. 31 zeigt auch die nach der Werkzeugfertigung folgenden Schritte in einem Überblick.

Das Modul "Werkzeugbemusterung" 312 ist in Fig. 32 näher dargestellt.

In diesem Modul 312 werden Checklisten und Anhaltswerte für den Maschineneinrichter bereitgestellt, sowie die Auswahl der verwendeten Spritzgießmaschine durchgeführt.

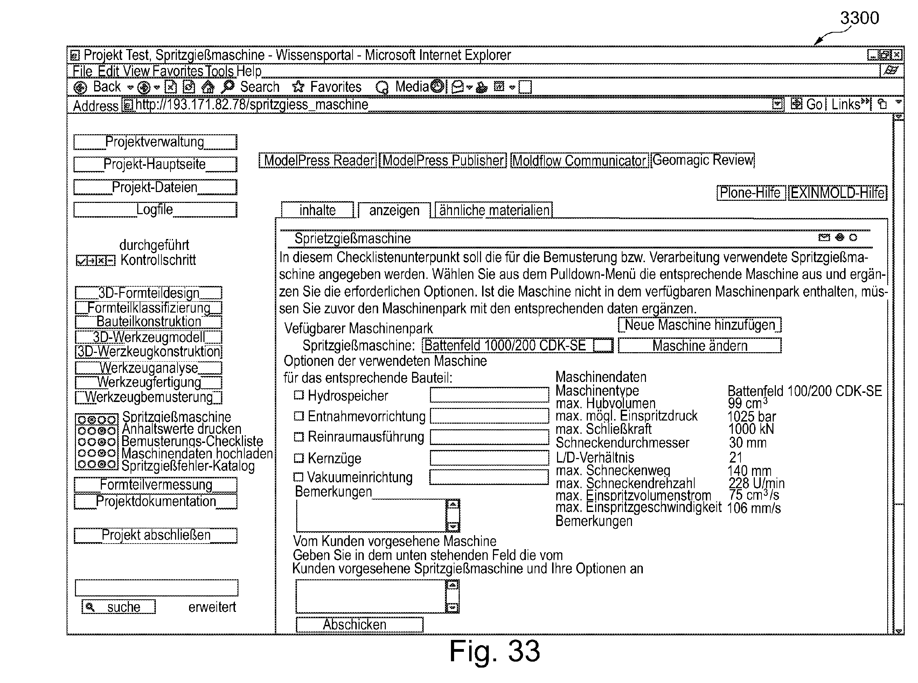

Die für die Bemusterung bzw. Fertigung verwendete Spritzgießmaschine wird im Unterpunkt "Spritzgießmaschine" gespeichert (siehe Computerfenster 3300 in **Fig. 33**). Zur Auswahl der Maschine steht eine Maschinendatenbank zur Verfügung. Diese Datenbank muss mit den Maschinen aus dem Maschinenpark aufgefüllt werden (Schaltfläche "Neue Maschine hinzufügen"). Die für die Bemusterung verwendete Maschine kann dann aus dem Pull-Down-Feld ausgewählt und die vorgesehenen Maschinenoptionen in das Formular eingetragen werden. Eine Änderung der Maschinendaten aus dem Maschinenpark ist über die Schaltfläche "Maschine ändern" möglich. Die von dem Benutzer vorgesehene Spritzgießmaschine soll in dem entsprechenden Formularfeld eingetragen werden.

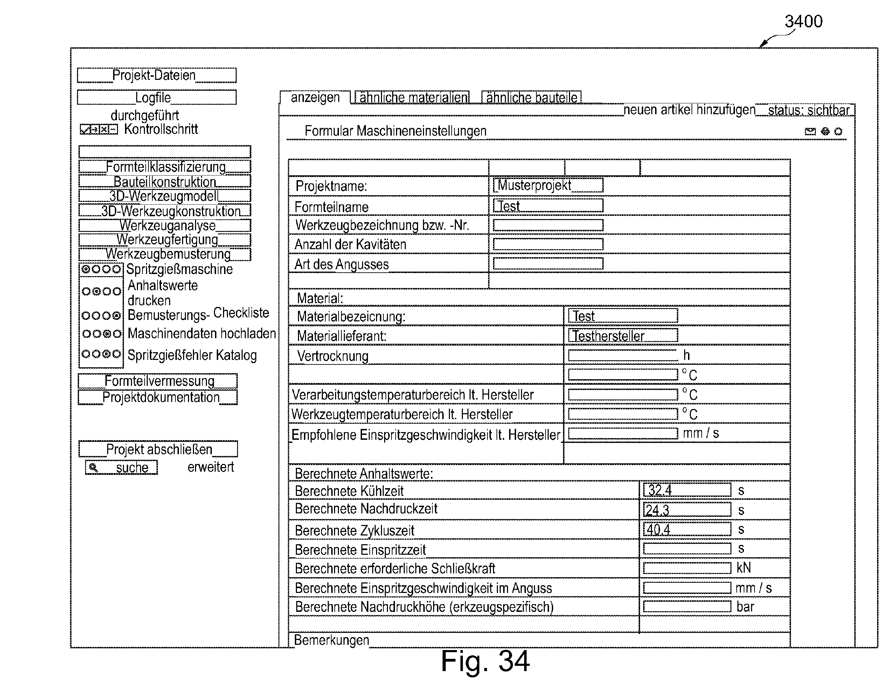

Ein Vorschlag für die Maschineneinstellgrößen kann aus dem Expertensystem ausgedruckt werden (siehe Formular 3400 in **Fig. 34**). Einige Einträge werden automatisch in das Formular 3400 übernommen. Voraussetzung dafür ist, dass in den vorangegangenen Modulen die Checklisten-Unterpunkte "Materialauswahl", "Formteilfamilienzuordnung/Codierung" und "Zykluszeitberechnung" abgeschlossen wurden. Sollten in dem Formular 3400 für die Maschineneinstellungen spezifische Daten fehlen, sind diese durch den Konstrukteur oder den Maschineneinrichter zu ergänzen.

Um bei der Abmusterung eine strukturierte Vorgehensweise zu ermöglichen, wurden wichtige Schritte in einer Checkliste dokumentiert. Diese Checkliste steht ebenfalls zum Ausdrucken zur Verfügung und kann bei Bedarf an den Maschineneinrichter weitergeleitet werden.

Die letztlich aktuellen Maschinendaten nach dem Erzielen von Gutteilen sind wieder in das Expertensystem zurückzuführen.

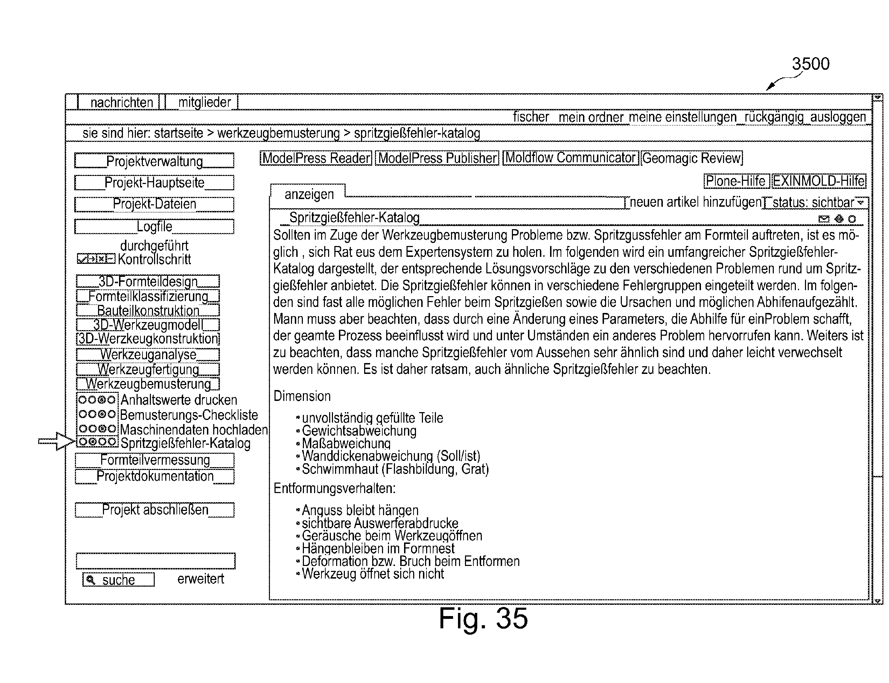

Im Weiteren wird ein in dem System implementierter Spritzgießfehler-Katalog beschrieben, der in einem Computerfenster 3500 in **Fig. 35** gezeigt ist.

Sollten Probleme bei der Werkzeugbemusterung bzw. Spritzgießfehler am Formteil auftreten, ist es möglich, sich Rat in diesem Modul zu holen.

Im Expertensystem ist ein umfangreicher Spritzgießfehler-Katalog eingebaut, der entsprechende Lösungsvorschläge zu den verschiedenen Problemen beim Spritzgießen anbietet.

Die Spritzgießfehler und deren Behebungsmöglichkeiten können in dem Expertensystem als pdf-Files abgespeichert sein. Das Inhaltsverzeichnis ist in folgender Form gegliedert:
- Dimension
- Entformungssverhalten
- Farbe
- Glanz
- Mechanische Eigenschaften
- Oberflächenfehler
- Schlieren oder Streifen
- Stippen oder Punkte
- Unebenheiten
- Verarbeitung

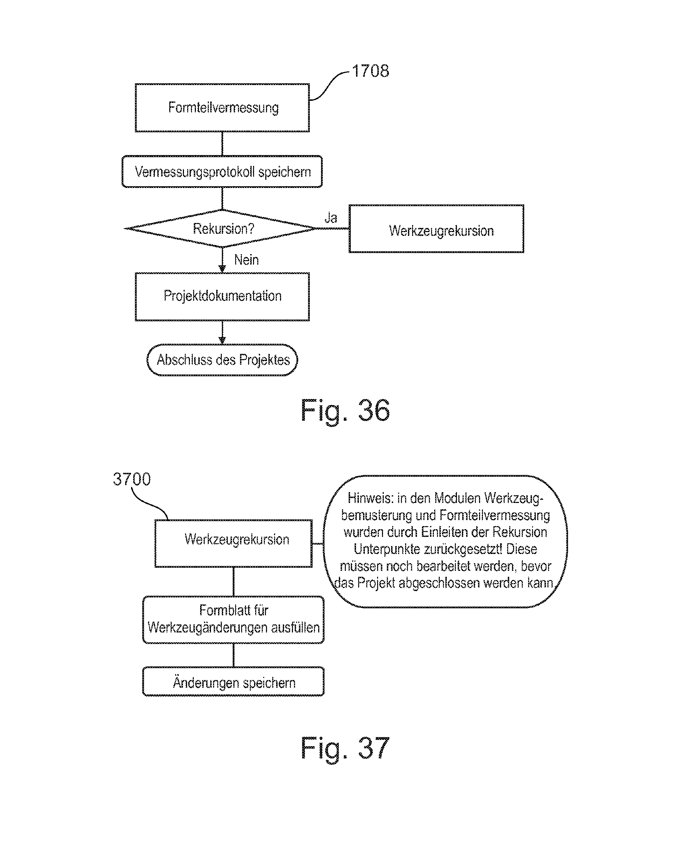

Das Modul "Formteilvermessung" 1708 ist in Fig. 36 näher dargestellt.

Neben der optischen Beurteilung der Formteile erfolgt im Laufe der Abmusterung die Qualitätsüberprüfung durch Vermessungen bzw. andere Funktionsprüfungen.

Die Artikelabmessungen werden von der Qualitätskontrolle erfasst, dokumentiert und ausgewertet. Der Werkzeugkonstrukteur ist über die Ergebnisse der Qualitätskontrolle zu informieren.

Der Projektleiter, die Qualitätssicherung, der Konstrukteur und Maschineneinrichter müssen im Falle von größeren Abweichungen adaptierende Änderungsmaßnahmen entscheiden und im Sinne des Expertensystems eine Rekursionsschleife einleiten. In dem System kann eine Rekursionsschleife anhand eines Checklistenunterpunktes "Rekursion notwendig" eingeleitet werden. Hierfür kann ein eigenes Modul "Rekursion" am Bildschirm eingefügt werden (siehe Modul Werkzeugrekursion 3700 in **Fig. 37**).

Die Werkzeugrekursion 3700 ist in ihren Maßnahmen im Expertensystem zu dokumentieren.

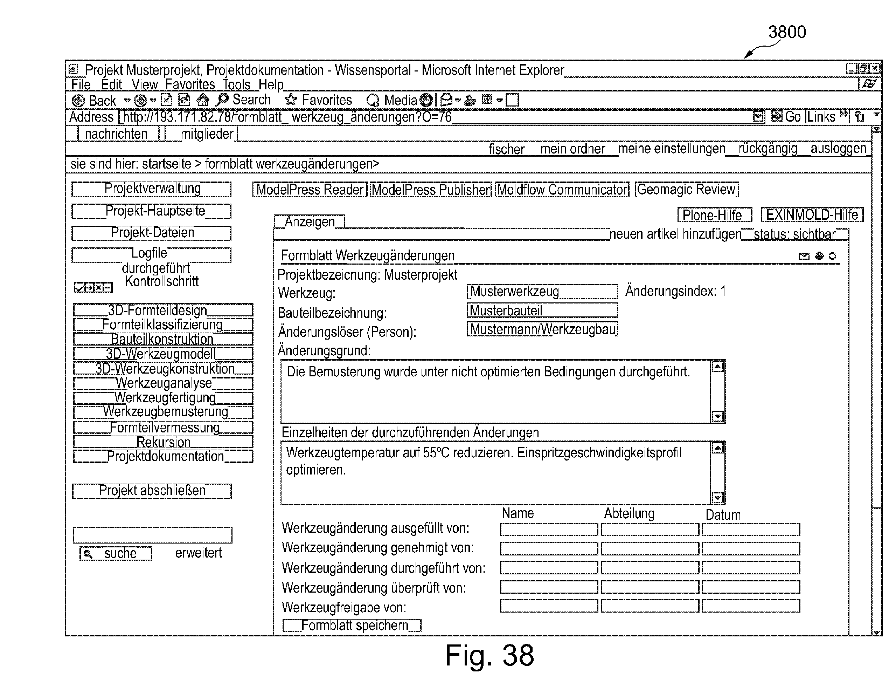

Als Hilfsmittel sind zunächst Formblätter für die Werkzeugänderung auszufüllen (siehe Computerfenster 3800 in **Fig. 38**). Für jede Rekursionsschleife wird von dem Expertensystem ein separates Formblatt mit den vorhergehenden Änderungen ausgegeben, gleichzeitig erfolgt eine automatische Nummerierung der Änderungsschleifen.

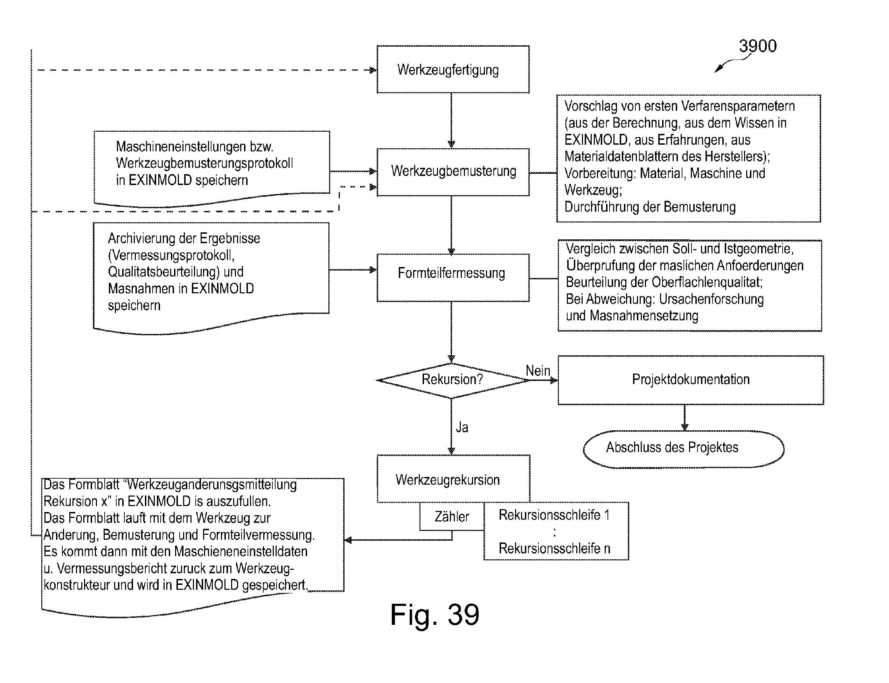

Die Änderungen können sehr unterschiedlicher Natur sein (siehe Flussdiagramm 3900 gemäß **Fig. 39**). Im einfachsten Fall werden nochmals Abmusterungen mit veränderten Prozessparametern oder einem anderen Material durchgeführt. Die weitaus komplizierteren Änderungen sind Änderungen am Werkzeug selbst oder sogar am Formteildesign. In diesem Falle würden geänderte Werkzeugzeichnungen oder eine Änderung der Formteilgeometrie erforderlich werden. Die konstruktiven Änderungen sind ebenfalls im Expertensystem mit zu dokumentieren und dienen einerseits der Qualitätssicherung und andererseits der Kostenkontrolle.

Durch das Einleiten einer Werkzeugrekursionsschleife wird im Expertensystem automatisch eine Zurücksetzung mehrerer Checklistenunterpunkte durchgeführt. Auf diesem Wege wird dem Benutzer signalisiert, dass zum Beispiel ein neues Spritzgießprotokoll oder ein Vermessungsbericht für die erste Rekursion gespeichert werden muss.

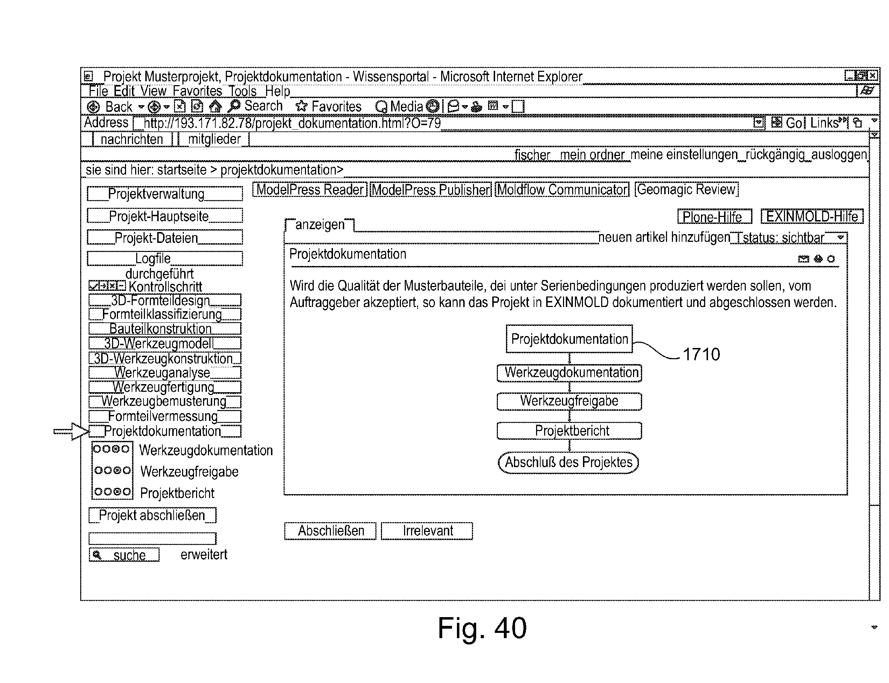

Das Modul "Projektdokumentation" 1710 ist in Fig. 40 näher dargestellt.

In der Projektdokumentation werden alle bisher noch nicht erfassten Daten gespeichert. Im Checklistenunterpunkt "Werkzeugdokumentation" sollen die Konstruktionsdaten des Werkzeugs gespeichert werden. Daneben sollen auch das Heizungsschema (Heißkanalanguss), der Kühlplan sowie der Instandhaltungs- bzw. Wartungsplan gespeichert werden.

Die letztendliche Werkzeugfreigabe erfolgt durch die Qualitätssicherung und ist ebenfalls im System zu dokumentieren.

Durch die strikte Dokumentation im Programmsystem an den entsprechenden Platzhaltern kann mit der Werkzeugfreigabe ein Projektbericht ausgegeben werden. Bevor der Projektbericht erstellt wird, sollen alle Checklistenunterpunkte bearbeitet worden sein und die Module den Status "abgeschlossen" haben.

Der Projektbericht dient der Dokumentation der Qualitätssicherung, der Nachkalkulation und der Feststellung der Durchlaufzeit, der Information bei weiteren ähnlichen Neukonstruktionen und nicht zuletzt der Dokumentation der Maschineneinstelldaten.

Darüber hinaus dokumentieren diese Projektberichte Know-how und Wissen, welche insbesondere für die Unternehmensführung als Entscheidungshilfen mit genutzt werden können.

Die Voraussetzung dafür ist jedoch, dass die Dokumentation durchgängig und konsequent erfolgt.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Vorrichtung zum Gestalten eines Formteils, wobei die Vorrichtung aufweist:
eine Eingabeeinheit zum benutzerdefinierten Eingeben von Gestaltungs-Daten zum Definieren des zu gestaltenden Formteils;
eine Formteil-Datenbank, in der eine Mehrzahl von Formteil-Datensätzen gespeichert sind, von denen jeder für ein in der Vergangenheit gestaltetes Formteil kennzeichnend ist, wobei die Mehrzahl von Formteil-Datensätzen nach einer Mehrzahl von Formteilklassen klassifiziert sind;
eine Auswahleinheit zum Auswählen von mindestens einem der Formteil-Datensätze als Basis für das Gestalten des Formteils, wobei das Auswählen basierend auf den eingegebenen Gestaltungs-Daten und den Formteilklassen erfolgt;
eine Formteilgestaltungseinheit zum prozessorgesteuerten Unterstützen des Gestaltens des Formteils basierend auf dem mindestens einen ausgewählten Formteil-Datensatz; und
eine Werkzeuggestaltungseinheit, die zum prozessorgesteuerten Unterstützen des Gestaltens eines Werkzeugs zum physischen Herstellen des gestalteten Formteils eingerichtet ist.

2. Vorrichtung nach Anspruch 1, eingerichtet zum Gestalten eines Spritzgussteils als Formteil, insbesondere eines spritzgegossenen Kunststoffformteils.

3. Vorrichtung nach Anspruch 1 oder 2, wobei die Formteilgestaltungseinheit beim Gestalten des Formteils zum Überwachen des Einhaltens mindestens eines Kriteriums bezüglich Schwindung und Verzug des zu gestaltenden Formteils eingerichtet ist.

4. Vorrichtung nach einem der Ansprüche 1 bis 3, wobei die Formteilgestaltungseinheit beim Gestalten des Formteils zum Zugriff auf Daten in den Formteil-Datensätzen betreffend Schwindung und Verzug eingerichtet ist.

5. Vorrichtung nach einem der Ansprüche 1 bis 4, wobei die Formteilgestaltungseinheit eingerichtet ist, zum Gestalten des Formteils rekursiv auf dem mindestens einen ausgewählten Formteil-Datensatz zuzugreifen und die Rekursion fortzusetzen, bis das gestaltete Formteil mindestens ein vorgebbares Kriterium erfüllt.

6. Vorrichtung nach einem der Ansprüche 1 bis 5, wobei die Formteilgestaltungseinheit eingerichtet ist, das gestaltete Formteil hinsichtlich mindestens eines vorgebbaren Fehlerkriteriums zu untersuchen und bei Auffinden eines Fehlers eine dem aufgefundenen Fehler zugeordnete Fehlervermeidungsmaßnahme einzuleiten.

7. Vorrichtung nach einem der Ansprüche 1 bis 6, wobei die Formteilgestaltungseinheit eingerichtet ist, das gestaltete Formteil hinsichtlich mindestens eines vorgebbaren Herstellungsaufwandkriteriums zu untersuchen.

8. Vorrichtung nach einem der Ansprüche 1 bis 7, wobei die Auswahleinheit zum Auswählen des mindestens einen der Formteil-Datensätze basierend auf einer Ähnlichkeit des zu gestaltenden Formteils mit einem einem jeweiligen Formteil-Datensatz zugeordneten Formteil eingerichtet ist.

9. Vorrichtung nach einem der Ansprüche 1 bis 8, wobei die Auswahleinheit zum Auswählen des mindestens einen der Formteil-Datensätze basierend auf einem Vergleich einer Werkzeugfamilie zum Herstellen des zu gestaltenden Formteils mit einer Werkzeugfamilie zum Herstellen des einem jeweiligen Formteil-Datensatz zugeordneten Formteils eingerichtet ist.

10. Vorrichtung nach einem der Ansprüche 1 bis 9, wobei die Werkzeuggestaltungseinheit zum Gestalten des Werkzeugs basierend auf einer in der Mehrzahl von Formteil-Datensätzen enthaltenen Werkzeugbauart eingerichtet ist, welche Werkzeugbauart einem zugehörigen in der Vergangenheit gestalteten Formteil zugeordnet ist.

11. Vorrichtung nach einem der Ansprüche 1 bis 10, aufweisend eine Aktualisierungsseinheit, die nach Fertigstellung des Gestaltens zum Aktualisieren der Formteil-Datenbank mittels Speicherns eines das gestaltete Formteil kennzeichnenden Formteil-Datensatzes in der Formteil-Datenbank eingerichtet ist.

12. Vorrichtung nach einem der Ansprüche 1 bis 11, aufweisend eine Vorhersageeinheit, die zum Vorhersagen von Schwindung und Verzug des gestalteten Formteils basierend auf Daten in der Formteil-Datenbank eingerichtet ist.

13. Verfahren zum Gestalten eines Formteils, wobei das Verfahren aufweist:
Empfangen einer benutzerdefinierten Eingabe von Gestaltungs-Daten zum Definieren des zu gestaltenden Formteils;
Bereitstellen einer Formteil-Datenbank, in der eine Mehrzahl von Formteil-Datensätzen gespeichert sind, von denen jeder für ein in der Vergangenheit gestaltetes Formteil kennzeichnend ist, wobei die Mehrzahl von Formteil-Datensätzen nach einer Mehrzahl von Formteilklassen klassifiziert sind;
Auswählen von mindestens einem der Formteil-Datensätze als Basis für das Gestalten des Formteils, wobei das Auswählen basierend auf den eingegebenen Gestaltungs-Daten und den Formteilklassen erfolgt;
prozessorgesteuertes Unterstützen des Gestaltens des Formteils basierend auf dem mindestens einen ausgewählten Formteil-Datensatz; und
prozessorgesteuertes Unterstützen des Gestaltens eines Werkzeugs zum physischen Herstellen des gestalteten Formteils.

14. Computerlesbares Speichermedium, in dem ein Programm zum Gestalten eines Formteils gespeichert ist, welches Programm, wenn es von einem Prozessor ausgeführt wird, das Verfahren nach Anspruch 13 ausführt oder steuert.

15. Programm-Element zum Gestalten eines Formteils, welches Programm-Element, wenn es von einem Prozessor ausgeführt wird, das Verfahren nach Anspruch 13 ausführt oder steuert.
